(19) Europäisches Patentamt
European Patent Office
Office européen des brevets

(11) **EP 2 890 047 B1**

(12) **EUROPEAN PATENT SPECIFICATION**

(45) Date of publication and mention
of the grant of the patent:
**21.09.2016 Bulletin 2016/38**

(51) Int Cl.:
*H04L 9/08* (2006.01)   *H04L 9/32* (2006.01)

(21) Application number: **14199527.4**

(22) Date of filing: **22.12.2014**

(54) **Key processing method and apparatus**

Schlüsselverarbeitungsverfahren und Vorrichtung

Procédé et appareil de traitement de clé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2013 CN 201310746982**

(43) Date of publication of application:
**01.07.2015 Bulletin 2015/27**

(73) Proprietor: **Huawei Technologies Co., Ltd.
Longgang District
Shenzhen, Guangdong 518129 (CN)**

(72) Inventors:
• **Yu, Jia
Shenzhen Guangdong 518129 (CN)**
• **Cheng, Xiangguo
Shenzhen Guangdong 518129 (CN)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
**US-A1- 2009 323 937    US-A1- 2011 176 681**

• **PERRIG A ET AL: "Efficient authentication and signing of multicast streams over lossy channels", PROCEEDINGS OF 2000 IEEE SYMPOSIUM ON SECURITY AND PRIVACY; 14-17 MAY 2000; BERKELEY, CA, USA, IEEE COMPUTER SOCIETY, LOS ALAMITOS, CA, USA, 14 May 2000 (2000-05-14), pages 56-73, XP010501126, DOI: 10.1109/SECPRI.2000.848446 ISBN: 978-0-7695-0665-4**

**Description**

**TECHNICAL FIELD**

The present application relates to the field of information processing technologies, and in particular, to a key processing method and apparatus.

**BACKGROUND**

Key leakage threatens security of cryptosystem seriously. How to reduce harm caused by key leakage onto cryptosystem is research work of important theoretic significance and practical value.

Key update is an effective way of reducing the harm caused by key leakage and improving security. In an asymmetric key encryption manner, keys primarily include public keys and private keys, and updating a key primarily refers to updating a private key. An existing solution to implementation of key update is as follows: by using an idea of an intrusion tolerance technology, a life cycle of a key is divided into multiple time segments, each time segment is subdivided into multiple time sub-segments, and a public key remains unchanged throughout the life cycle; upon entry to each time sub-segment of each time segment, a user equipment is triggered to update a private key by using an update message provided by a security device, so that even if an intruder intrudes into the user equipment or the security device, so long as the intrusion is not launched in a same time sub-segment of a same time segment, the intruder is unable to calculate keys of a user in other time segments, thereby reducing harm caused by key leakage.

In the process of implementing the present invention, the inventor finds that in a key update operation based on this intrusion tolerance technology, how to implement simplicity and flexibility of the key update operation is a technical problem that a person skilled in the art urgently needs to solve currently.

Perrig A. et al.: "Efficient authentication and signing of multicast streams over lossy channels", Proceedings of 2000 IEEE Symposium on Security and Privacy; 14-17 May 2000, Berkeley, CA, USA, IEEE Computer Society, Los Alamitos, CA, USA, 14 May 2000, pp. 56-73, discloses schemes for stream authentication. A stream S is divided into chunks also called messages. Each message is sent in a packet with additional authentication information. In a basic scheme, a first packet needs to be authorized with a regular digital signature scheme, e.g. RAS. To send a message $M_i$, the sender picks a random key $K_{i+1}$ and constructs a packet $P_i$ including the message, a pseudo function of $K_{i+1}$, $K_{i-1}$ and a message authentication code under using a key $K'_i$ which is a pseudo function of $K_i$. When the receiver receives the packet, it cannot verify the message authentication code instantly since it does not know $K_i$ and cannot construct $K'_i$. However, the following packet discloses $K_i$ and allows the receiver to verify $K_i$ and to compute $K'_i$ and check authentication of the packed $P_i$ by verifying the message authentication code of the packet.

US 2009/323937 A1 discloses a multilevel data encryption and decryption system and a method thereof. The method includes dividing data into a plurality of sub-data blocks corresponding to a plurality of user levels. The method also includes generating an encryption key for each level according to a level generation key and a time key of the level.

US 2011/0176681 A1 discloses a communication apparatus including an encryption key generation unit that generates encryption key information at constant encryption key generation intervals.

**SUMMARY**

The present invention provides key processing methods of claims 1 and 8 and apparatus of claims 9 and 13 to implement flexibility of updating a key and simplicity of operations.

To fulfill the foregoing objectives, the present application provides the following technical solutions:

A first aspect provides a key processing method, including:

obtaining, by a user equipment, a private key update message provided by a security device, where the private key update message includes an update parameter generated when the security device enters an $r^{th}$ time sub-segment of an $i^{th}$ time segment, where i and r represent time index values and both are integers greater than or equal to 0; generating, when r is 0, a user's private key of the $r^{th}$ time sub-segment of the $i^{th}$ time segment by using the update parameter generated when the security device enters the $r^{th}$ time sub-segment of the $i^{th}$ time segment, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and generating, when r is greater than 0, the user's private key of the $r^{th}$ time sub-segment of the $i^{th}$ time segment by using the update parameter generated when the security device enters the $r^{th}$ time sub-segment of the $i^{th}$ time segment, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, where:

a user's private key of a $0^{th}$ time sub-segment of a $0^{th}$ time segment is generated by using a first random parameter and a key Hash value, where the first random parameter is randomly selected from a preset value set, and the key Hash value is element data that belongs to a first cyclic group of bilinear mapping and is obtained by performing a Hash operation on a time index value of the $0^{th}$ time sub-segment of the $0^{th}$ time segment.

In a first possible implementation manner of the first aspect, the update parameter of the $i^{th}$ time sub-segment of the $i^{th}$ time segment is generated by the security device by using a device's private key of the $r^{th}$ time sub-segment of the $i^{th}$ time segment, where a device's private key of the $0^{th}$ time sub-segment of the $0^{th}$ time segment is a second random parameter randomly selected from the preset value set; and the device's private key of the $r^{th}$ time sub-segment of the $i^{th}$ time segment is generated by using a device's private key of the $(r-1)^{th}$ time sub-segment of the $i^{th}$ time segment or the last time sub-segment of the $(i-1)^{th}$ time segment, and a third random parameter randomly selected from the preset value set; and

therefore, the user's private key of the $0^{th}$ time sub-segment of the $0^{th}$ time segment is specifically generated by using the first random parameter, the device's private key of the $0^{th}$ time sub-segment of the $0^{th}$ time segment, and the key Hash value.

According to the first aspect a user's private key includes a first private key parameter and a second private key parameter, and the update parameter includes a first update parameter and a second update parameter;

the generating, when r is 0, a user's private key of the $r^{th}$ time sub-segment of the $i^{th}$ time segment by using the update parameter generated when the security device enters the $r^{th}$ time sub-segment of the $i^{th}$ time segment, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment, includes:

obtaining, when r is 0, element data by performing a Hash operation on the time index values of the $r^{th}$ time sub-segment of the $i^{th}$ time segment and the last time sub-segment of the $(i-1)^{th}$ time segment, where the element data belongs to the first cyclic group; generating a first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the last time sub-segment of the $(i-1)^{th}$ time segment; and generating a second private key parameter of the $r^{th}$ time sub-segment of the $i^{th}$ time segment by using the second update parameter and the second private key parameter of the last time sub-segment of the $(i-1)^{th}$ time segment; and the generating, when r is greater than 0, the user's private key of the $r^{th}$ time sub-segment of the $i^{th}$ time segment by using the update parameter generated when the security device enters the $r^{th}$ time sub-segment of the $i^{th}$ time segment, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, includes:

obtaining, when r is greater than 0, the element data by performing a Hash operation on the time index values of the $r^{th}$ time sub-segment and the $(r-1)^{th}$ time sub-segment of the $i^{th}$ time segment, where the element data belongs to the first cyclic group; generating the first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the $(r-1)^{th}$ time sub-segment of the $i^{th}$ time segment; and generating the first private key parameter of the $r^{th}$ time sub-segment of the $i^{th}$ time segment by using the second private key parameter of the $(r-1)^{th}$ time sub-segment of the $i^{th}$ time segment and the second update parameter generated when the security device enters the $r^{th}$ time sub-segment of the $i^{th}$ time segment.

With reference to any possible implementation manner of the first aspect, a second possible implementation manner of the first aspect is further provided, where: the obtaining, when r is 0, element data by performing a Hash operation on the time index values of the $r^{th}$ time sub-segment of the $i^{th}$ time segment and the last time sub-segment of the $(i-1)^{th}$ time segment, where the element data belongs to the first cyclic group; generating a first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the last time sub-segment of the $(i-1)^{th}$ time segment; and

generating a second private key parameter of the $r^{th}$ time sub-segment of the $i^{th}$ time segment by using the second private key parameter of the last time sub-segment of the $(i-1)^{th}$ time segment and the second update parameter generated when the security device enters the $r^{th}$ time sub-segment of the $i^{th}$ time segment, includes:

generating, when r is 0, the user's private key of the $r^{th}$ time sub-segment of the $i^{th}$ time segment according to a first private key update formula by using the first update parameter and the second update parameter that are generated when the security device enters the r$^{\text{th}}$ time sub-segment of the i$^{\text{th}}$ time segment, the first private key parameter and the second private key parameter of the last time sub-segment of the (i-1)$^{\text{th}}$ time segment, and the time index values of the r$^{\text{th}}$ time sub-segment of the i$^{\text{th}}$ time segment and the last time sub-segment of the (i-1)$^{\text{th}}$ time segment, where:

the first private key update formula includes:

$$S_{i,r} = S_{i-1,RN[i-1]} + SKR_{i,r} - \sigma H_1(i,r) + u_{i-1,RN[i-1]}(H_1(i,r) - H_1(i-1,RN[i-1]));$$

and

$$u_{i,r} = u_{i\text{-}1,RN[i-1]} - \sigma,$$

where:

$S_{i,r}$ represents the first private key parameter of the r$^{\text{th}}$ time sub-segment of the i$^{\text{th}}$ time segment, and $u_{i,r}$ represents the second private key parameter of the r$^{\text{th}}$ time sub-segment of the i$^{\text{th}}$ time segment;
$SKR_{i,r}$ represents the first update parameter of the r$^{\text{th}}$ time sub-segment of the i$^{\text{th}}$ time segment, and $\sigma$ represents the second update parameter of the r$^{\text{th}}$ time sub-segment of the i$^{\text{th}}$ time segment;
$RN$[i-1] represents the time index value of the last time sub-segment of the (i-1)$^{\text{th}}$ time segment;
$H_1(i,r)$ represents the element data that belongs to the first cyclic group and is obtained by performing a Hash operation on the time index values i and r, and $H_1(i\text{-}1,RN[i\text{-}1])$ represents the element data that belongs to the first cyclic group and is obtained by performing a Hash operation on the time index values i-1 and $RN$[i-1];

the obtaining, when r is greater than 0, the element data by performing a Hash operation on the time index values of the r$^{\text{th}}$ time sub-segment and the (r-1)$^{\text{th}}$ time sub-segment of the i$^{\text{th}}$ time segment, where the element data belongs to the first cyclic group; generating the first private key parameter of the r$^{\text{th}}$ time sub-segment of the i$^{\text{th}}$ time segment by using the element data, the first update parameter and the second update parameter that are generated when the security device enters the r$^{\text{th}}$ time sub-segment of the i$^{\text{th}}$ time segment, and a first private key parameter and a second private key parameter of the (r-1)$^{\text{th}}$ time sub-segment of the i$^{\text{th}}$ time segment; and generating the first private key parameter of the r$^{\text{th}}$ time sub-segment of the i$^{\text{th}}$ time segment by using the second private key parameter of the (r-1)$^{\text{th}}$ time sub-segment of the i$^{\text{th}}$ time segment and the second update parameter generated when the security device enters the r$^{\text{th}}$ time sub-segment of the i$^{\text{th}}$ time segment, includes:

generating the user's private key of the r$^{\text{th}}$ time sub-segment of the i$^{\text{th}}$ time segment according to a second private key update formula by using the first update parameter and the second update parameter that are generated when the security device enters the r$^{\text{th}}$ time sub-segment of the i$^{\text{th}}$ time segment, the first private key parameter and the second private key parameter of the (r-1)$^{\text{th}}$ time sub-segment of the i$^{\text{th}}$ time segment, and the time index values of the r$^{\text{th}}$ time sub-segment and the (r-1)$^{\text{th}}$ time sub-segment of the i$^{\text{th}}$ time segment, where:

the second private key update formula is:

$$S_{i,r} = S_{i,r-1} + SKR_{i,r} - \sigma H_1(i,r) + u_{i,r-1}(H_1(i,r) - H_1(i,r-1));$$

and

$$u_{i,r} = u_{i,r-1} - \sigma,$$

where:

$H_1(i,r\text{-}1)$ represents the element data that belongs to the first cyclic group and is obtained by performing a Hash operation on the time index values i and r-1; and

the user's private key of the $0^{th}$ time sub-segment of the $0^{th}$ time segment is specifically generated according to a key generation formula by using the first random parameter, the device's private key of the $0^{th}$ time sub-segment of the $0^{th}$ time segment, and the key Hash value, where:

the key generation formula is:

$$S_{0,0} = u_{0,0} H_1(0,0) + b_{0,0} H_1(0,0),$$

where:

$S_{0,0}$ represents a first private key parameter of the $0^{th}$ time sub-segment of the $0^{th}$ time segment, $u_{0,0}$ is the first random parameter, where the first random parameter is a second private key parameter of the $0^{th}$ time sub-segment of the $0^{th}$ time segment, $H_1(0,0)$ is a Hash value of the $0^{th}$ time sub-segment of the $0^{th}$ time segment, and $b_{0,0}$ is the device's private key of the $0^{th}$ time sub-segment of the $0^{th}$ time segment.

With reference to any possible implementation manner of the first aspect, a third possible implementation manner of the first aspect is further provided, where the second update parameter is the third random parameter; when r is 0, the first update parameter is specifically generated by the security device according to a first parameter generation formula by using the device's private key of the $r^{th}$ time sub-segment of the $i^{th}$ time segment, the device's private key of the last time sub-segment of the $(i-1)^{th}$ time segment, and the element data that belongs to the first cyclic group and is obtained by performing a Hash operation on the time index values of the $r^{th}$ time sub-segment of the $i^{th}$ time segment and the last time sub-segment of the $(i-1)^{th}$ time segment, where the first parameter generation formula is:

$$SKR_{i,r} = b_{i,r} H_1(i,r) - b_{i-1,RN[i-1]} H_1(i-1, RN[i-1]),$$

where:

$b_{i,r}$ represents the device's private key of the $r^{th}$ time sub-segment of the $i^{th}$ time segment, $b_{i-1,RN[i-1]}$ represents the device's private key of the last time sub-segment of the $(i-1)^{th}$ time segment, $b_{i,r} = b_{i-1,RN[i-1]} + \delta$, and $\delta$ is the third random parameter; and

when r is greater than 0, the first update parameter is specifically generated by the security device according to a second parameter generation formula by using the device's private key of the $r^{th}$ time sub-segment of the $i^{th}$ time segment, the device's private key of the $(r-1)^{th}$ time sub-segment of the $i^{th}$ time segment, and the element data that belongs to the first cyclic group and is obtained by performing a Hash operation on the time index values of the $r^{th}$ time sub-segment and the $(r-1)^{th}$ time sub-segment of the $i^{th}$ time segment, where:

the second parameter generation formula is:

$$SKR_{i,r} = b_{i,r} H_1(i,r) - b_{i,r-1} H_1(i,r-1),$$

where:

$b_{i,r-1}$ represents the device's private key of the $(r-1)^{th}$ time sub-segment of the $i^{th}$ time segment, and $b_{i,r} = b_{i,r-1} + \delta$.

With reference to any one of the foregoing possible implementation manners of the first aspect, a fourth possible implementation manner of the first aspect is further provided, where the method further includes:

obtaining a $q^{th}$-order first cyclic group G1 and a $q^{th}$-order second cyclic group G2 that are generated according to a security parameter k, where the two $q^{th}$-order cyclic groups satisfy bilinear mapping e: G1×G1→G2, where q is a prime number, and k is a bit length of q, where:

the preset value set is $Z^*_q$, where $Z^*_q$ represents a remainder set that does not include a value 0 and is obtained by performing a modulo operation between of an integer set Z and q.

With reference to any one of the foregoing possible implementation manners of the first aspect, a fifth possible implementation manner of the first aspect is further provided, where the method further includes:

decrypting, when a ciphertext obtained by encrypting target data by using a user's public key and a target time index value is received, the ciphertext by using a user's private key corresponding to the target time index value, so as to obtain the target data.

With reference to the sixth possible implementation manner of the first aspect, a seventh possible implementation manner of the first aspect is further provided, where the user's public key is generated according to a public key generation formula by using a generator of the first cyclic group, and the device's private key and the first private key parameter of the $0^{th}$ time sub-segment of the $0^{th}$ time segment, where the public key generation formula is:

$$PK_B = b_{0,0}P, \quad P_{pub} = u_{0,0}P,$$

where:

$PK_B$ is a first public key parameter, $P_{pub}$ is a second public key parameter, and $P$ is the generator of the first cyclic group;
therefore, the ciphertext is specifically obtained according to an encryption formula, where the encryption formula is:

$$V = M \oplus H_2(e(P_{pub} + PK_B, H_1(i,r))^x);$$

and

$$U = xP,$$

where:

x is a fourth random parameter randomly selected from the preset value set, M is the target data, the ciphertext includes U, V, i, and r; and $H_2(e(P_{pub} + PK_B, H_1(i,r))^x)$ represents element data that belongs to the second cyclic group and is obtained by performing a Hash operation on $e(P_{pub} + PK_B, H_1(i,r))^x)$;
therefore, the decrypting the ciphertext by using a user's private key corresponding to the time index value, so as to obtain the target data, is specifically: obtaining the target data according to a decryption formula by using the user's private key corresponding to the time index value, where the decryption formula is:

$$M = V \oplus H_2\left(e(U, S_{i,r})\right),$$

where: $H_2(e(U,S_{i,r}))$ represents the element data that belongs to the second cyclic group and is obtained by performing a Hash operation on $e(U,S_{i,r})$.

A second aspect provides a key processing method, including:

generating an update parameter when a security device enters an $r^{th}$ time sub-segment of an $i^{th}$ time segment, and sending an update message that carries the update parameter to a user equipment, where the update message is used to instruct the user equipment to: when r is 0, generate a user's private key of the $r^{th}$ time sub-segment of the $i^{th}$ time segment by using the update parameter, a user's private key of a last time sub-segment of an $(i-1)^{th}$ time segment, and time index values of the $r^{th}$ time sub-segment of the $i^{th}$ time segment and the last time sub-segment of the (i-1)$^{th}$ time segment; and, when r is greater than 0, generate the user's private key of the r$^{th}$ time sub-segment of the i$^{th}$ time segment by using the update parameter, a user's private key of an (r-1)$^{th}$ time sub-segment of the i$^{th}$ time segment, and time index values of the r$^{th}$ time sub-segment and the (r-1)$^{th}$ time sub-segment of the i$^{th}$ time segment, where:

a user's private key of a 0$^{th}$ time sub-segment of a 0$^{th}$ time segment is generated by using a first random parameter and a key Hash value, where the first random parameter is randomly selected from a preset value set, and the key Hash value is element data that belongs to a first cyclic group and is obtained by performing a Hash operation on a time index value of the 0$^{th}$ time sub-segment of the 0$^{th}$ time segment.

According to the second aspect, the update parameter includes a first update parameter and a second update parameter, and a user's private key includes a first private key parameter and a second private key parameter, and therefore, the generating an update parameter when a security device enters an r$^{th}$ time sub-segment of an i$^{th}$ time segment includes:

generating, when r is 0, the update parameter according to a first parameter generation formula by using a device's private key of the r$^{th}$ time sub-segment of the i$^{th}$ time segment, a device's private key of the last time sub-segment of the (i-1)$^{th}$ time segment, and the time index values of the r$^{th}$ time sub-segment of the i$^{th}$ time segment and the last time sub-segment of the (i-1)$^{th}$ time segment, where:

the first parameter generation formula is:

$$SKR_{i,r} = b_{i,r}H_1(i,r) - b_{i-1,RN[i-1]}H_1(i-1, RN[i-1]),$$

where:

$bi_{,r}$ represents the device's private key of the r$^{th}$ time sub-segment of the i$^{th}$ time segment, $b_{i-1,RN[i-1]}$ represents the device's private key of the last time sub-segment of the (i-1)$^{th}$ time segment, $b_{i,r}=b_{i-1,RN[i-1]}+\delta$, and $\delta$ is a third random parameter randomly selected from the preset value set; and

generating, when r is greater than 0, the update parameter according to a second parameter generation formula by using the device's private key of the r$^{th}$ time sub-segment of the i$^{th}$ time segment, the device's private key of the (r-1)$^{th}$ time sub-segment of the i$^{th}$ time segment, and the time index values of the r$^{th}$ time sub-segment and the (r-1)$^{th}$ time sub-segment of the i$^{th}$ time segment, where:

the second parameter generation formula is:

$$SKR_{i,r} = b_{i,r}H_1(i,r) - b_{i,r-1}H_1(i,r-1),$$

where: $b_{i,r-1}$ represents the device's private key of the (r-1)$^{th}$ time sub-segment of the i$^{th}$ time segment, and $b_{i,r}=b_{i,r-1}+\delta$.

A third aspect provides a key processing apparatus, including:

an obtaining unit, configured to obtain a private key update message provided by a security device, where the private key update message includes an update parameter generated when the security device enters an r$^{th}$ time sub-segment of an i$^{th}$ time segment, where i and r represent time index values and both are integers greater than or equal to 0;

a first updating unit, configured to: generate, when r is 0, a user's private key of the r$^{th}$ time sub-segment of the i$^{th}$ time segment by using the update parameter generated when the security device enters the r$^{th}$ time sub-segment of the i$^{th}$ time segment, a user's private key of a last time sub-segment of an (i-1)$^{th}$ time segment, and time index values of the r$^{th}$ time sub-segment of the i$^{th}$ time segment and the last time sub-segment of the (i-1)$^{th}$ time segment; and

a second updating unit, configured to: generate, when r is greater than 0, the user's private key of the r$^{th}$ time sub-segment of the i$^{th}$ time segment by using the update parameter generated when the security device enters the r$^{th}$ time sub-segment of the i$^{th}$ time segment, a user's private key of an (r-1)$^{th}$ time sub-segment of the i$^{th}$ time segment, and time index values of the r$^{th}$ time sub-segment and the (r-1)$^{th}$ time sub-segment of the i$^{th}$ time segment, where:

a user's private key of a $0^{th}$ time sub-segment of a $0^{th}$ time segment is generated by using a first random parameter and a key Hash value, where the first random parameter is randomly selected from a preset value set, and the key Hash value is element data that belongs to a first cyclic group of bilinear mapping and is obtained by performing a Hash operation on a time index value of the $0^{th}$ time sub-segment of the $0^{th}$ time segment.

In a first possible implementation manner of the third aspect, the update parameter of the $r^{th}$ time sub-segment of the $i^{th}$ time segment is generated by the security device by using a device's private key of the $r^{th}$ time sub-segment of the $i^{th}$ time segment, where a device's private key of the $0^{th}$ time sub-segment of the $0^{th}$ time segment is a second random parameter randomly selected from the preset value set; and the device's private key of the $r^{th}$ time sub-segment of the $i^{th}$ time segment is generated by using a device's private key of the $(r-1)^{th}$ time sub-segment of the $i^{th}$ time segment or the last time sub-segment of the $(i-1)^{th}$ time segment, and a third random parameter randomly selected from the preset value set; and

therefore, the user's private key of the $0^{th}$ time sub-segment of the $0^{th}$ time segment is specifically generated by using the first random parameter, the device's private key of the $0^{th}$ time sub-segment of the $0^{th}$ time segment, and the key Hash value.

According to the third aspect a user's private key includes a first private key parameter and a second private key parameter, and the update parameter includes a first update parameter and a second update parameter;

the first updating unit is specifically configured to: obtain, when r is 0, element data by performing a Hash operation on the time index values of the $r^{th}$ time sub-segment of the $i^{th}$ time segment and the last time sub-segment of the $(i-1)^{th}$ time segment, where the element data belongs to the first cyclic group; generate a first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the last time sub-segment of the $(i-1)^{th}$ time segment; and, generate a second private key parameter of the $r^{th}$ time sub-segment of the $i^{th}$ time segment by using the second update parameter generated when the security device enters the $r^{th}$ time sub-segment of the $i^{th}$ time segment and the second private key parameter of the last time sub-segment of the $(i-1)^{th}$ time segment; the second updating unit is specifically configured to: obtain, when r is greater than 0, the element data by performing a Hash operation on the time index values of the $r^{th}$ time sub-segment and the $(r-1)^{th}$ time sub-segment of the $i^{th}$ time segment, where the element data belongs to the first cyclic group; generate the first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the $(r-1)^{th}$ time sub-segment of the $i^{th}$ time segment; and generate the first private key parameter of the $r^{th}$ time sub-segment of the $i^{th}$ time segment by using the second private key parameter of the $(r-1)^{th}$ time sub-segment of the $i^{th}$ time segment and the second update parameter generated when the security device enters the $r^{th}$ time sub-segment of the $i^{th}$ time segment.

ith reference to any one of the foregoing possible implementation manners of the third aspect, a second possible implementation manner of the third aspect is further provided, which further includes:

a cyclic group generating unit, configured to generate a $q^{th}$-order first cyclic group G1 and a $q^{th}$-order second cyclic group G2 according to a security parameter k, so that the two $q^{th}$-order cyclic groups satisfy bilinear mapping e: $G1 \times G1 \rightarrow G2$, where q is a prime number, and k is a bit length of q, where:

the preset value set is $Z^*_q$, where $Z^*_q$ represents a remainder set that does not include a value 0 and is obtained by performing a modulo operation between an integer set Z and q.

With reference to any possible implementation manner of the third aspect, a third possible implementation manner of the third aspect is further provided, which further includes:

a decrypting unit, configured to: decrypt, when a ciphertext obtained by encrypting target data by using a public key and a target time index value is received, the ciphertext by using a user's private key corresponding to the target time index value, so as to obtain the target data.

A fourth aspect provides a key processing apparatus, including:

an update parameter generating unit, configured to: generate an update parameter upon entry into an $r^{th}$ time sub-segment of an $i^{th}$ time segment, and send the update parameter to a user equipment, where the update parameter is used to instruct the user equipment to: when r is 0, generate a user's private key of the $r^{th}$ time sub-segment of the $i^{th}$ time segment by using the update parameter, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and, when r is greater than 0, generate the user's private key of the $r^{th}$ time sub-segment of the $i^{th}$ time segment by using the update parameter, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, where:

a user's private key of a $0^{th}$ time sub-segment of a $0^{th}$ time segment is generated by using a first random parameter and a key Hash value, where the first random parameter is randomly selected from a preset value set, and the key Hash value is element data that belongs to a first cyclic group and is obtained by performing a Hash operation on a time index value of the $0^{th}$ time sub-segment of the $0^{th}$ time segment.

According to the fourth aspect, the update parameter includes a first update parameter and a second update parameter, and a user's private key includes a first private key parameter and a second private key parameter, and the update parameter generating unit includes:

a first generating unit, configured to: generate, when r is 0, the update parameter according to a first parameter generation formula by using a device's private key of the $r^{th}$ time sub-segment of the $i^{th}$ time segment, a device's private key of the last time sub-segment of the $(i-1)^{th}$ time segment, and the time index values of the $r^{th}$ time sub-segment of the $i^{th}$ time segment and the last time sub-segment of the $(i-1)^{th}$ time segment, where:

the first parameter generation formula is:

$$ SKR_{i,r} = b_{i,r}H_1(i,r) - b_{i-1,RN[i-1]}H_1(i-1,RN[i-1]) , $$

where:

$b_{i,r}$ represents the device's private key of the $r^{th}$ time sub-segment of the $i^{th}$ time segment, $b_{i-1,RN[i-1]}$ represents the device's private key of the last time sub-segment of the $(i-1)^{th}$ time segment, $b_{i,r}=b_{i-1,RN[i-1]}+\delta$, and $\delta$ is a third random parameter randomly selected from the preset value set;

a second generating unit, configured to: generate, when the time index value r is greater than 0, the update parameter according to a second parameter generation formula by using the device's private key of the $r^{th}$ time sub-segment of the $i^{th}$ time segment, the device's private key of the $(r-1)^{th}$ time sub-segment of the $i^{th}$ time segment, and the time index values of the $r^{th}$ time sub-segment and the $(r-1)^{th}$ time sub-segment of the $i^{th}$ time segment, where

the second parameter generation formula is:

$$ SKR_{i,r} = b_{i,r}H_1(i,r) - b_{i,r-1}H_1(i,r-1) , $$

where
$b_{i,r-1}$ represents the device's private key of the $(r-1)^{th}$ time sub-segment of the $i^{th}$ time segment, and $b_{i,r}=b_{i,r-1}+\delta$.

In summary, the present application provides a key processing method and apparatus. A user equipment obtains an update parameter generated by a security device in an $r^{th}$ time sub-segment of an $i^{th}$ time segment; when r is 0, generates a user's private key of the $r^{th}$ time sub-segment of the $i^{th}$ time segment by using the update parameter, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and when r is greater than 0, generates the user's private key of the $r^{th}$ time sub-segment of the $i^{th}$ time segment by using the update parameter, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment. A user's private key of a $0^{th}$ time sub-segment of a $0^{th}$ time segment is generated by using a preset value set and data in a first cyclic group of bilinear mapping. A bit length of a user's private key generated by using bilinear mapping is short. In key updating, a private key can be updated by using a parameter of a time sub-segment previous to a current time sub-segment, without a need of increasing a key length, which is simple and highly efficient. In addition, the update and the generation of the private key are irrelevant to a life cycle of the key, and can be implemented only by using a time index value. Therefore, the life cycle of the key can be changed according to an actual application condition, which improves flexibility of updating the key.

BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show merely some embodiments of this application, and a person of ordinary skill in the art may still derive other drawings from the provided accompanying drawings without creative efforts.

FIG. 1 is a flowchart of an embodiment of a key processing method according to an embodiment of the present application;
FIG. 2 is a flowchart of another embodiment of a key processing method according to an embodiment of the present application;
FIG. 3 is a flowchart of another embodiment of a key processing method according to an embodiment of the present application;
FIG. 4 is a schematic structural diagram of an embodiment of a key processing apparatus according to an embodiment of the present application;
FIG. 5 is a schematic structural diagram of an embodiment of a user equipment according to an embodiment of the present application;
FIG. 6 is a schematic structural diagram of another embodiment of a key processing apparatus according to an embodiment of the present application; and
FIG. 7 is a schematic structural diagram of an embodiment of a security device according to an embodiment of the present application.

**DESCRIPTION OF EMBODIMENTS**

The following clearly describes the technical solutions in the embodiments of this application with reference to the accompanying drawings in the embodiments of the present application. Apparently, the described embodiments are only a part rather than all of the embodiments of this application. All other embodiments obtained by a person of ordinary skill in the art based on the embodiments of the present application without creative efforts shall fall within the protection scope of this application.

One of main ideas of the embodiments of the present application includes: obtaining, by a user equipment, an update parameter generated by a security device in an $r^{th}$ time sub-segment of an $i^{th}$ time segment; generating, when r is 0, a user's private key of the $r^{th}$ time sub-segment of the $i^{th}$ time segment by using the update parameter, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and generating, when r is greater than 0, the user's private key of the $r^{th}$ time sub-segment of the $i^{th}$ time segment by using the update parameter, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment; A user's private key of a $0^{th}$ time sub-segment of a $0^{th}$ time segment is generated by using a preset value set and data in a first cyclic group of bilinear mapping. A bit length of a user's private key generated by using bilinear mapping is short. In key updating, a private key can be updated by using a parameter of a time sub-segment previous to a current time sub-segment, without a need of increasing a key length, which is simple and highly efficient. In addition, the update and the generation of the private key are irrelevant to a life cycle of the key, and can be implemented only by using a time index value. Therefore, the life cycle of the key can be changed according to an actual application condition, which improves flexibility of updating the key.

The following describes the technical solutions of the present application in detail with reference to the accompanying drawings.

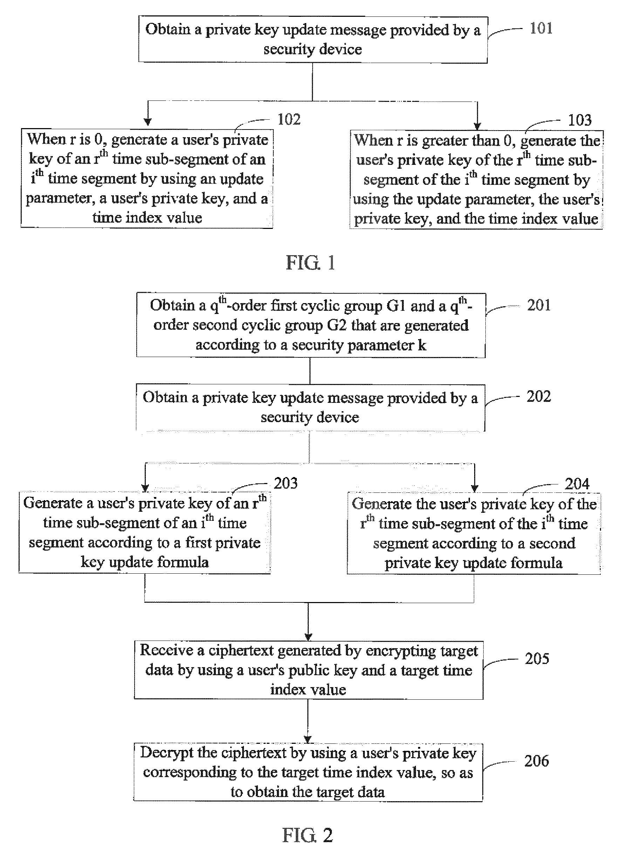

FIG. 1 is a flowchart of an embodiment of a key processing method according to an embodiment of the present application. The method may include the following steps:

101. A user equipment obtains a private key update message provided by a security device.

The private key update message includes an update parameter generated when the security device enters an

$r^{th}$ time sub-segment of an $i^{th}$ time segment, where i and r are two time index values and both are integers greater than or equal to 0.

This embodiment of the present application is implemented by using an idea of an intrusion tolerance technology. A life cycle of a key is divided into multiple time segments, and each time segment is subdivided into multiple time sub-segments. By using the key processing solution provided in this embodiment of the present application, a private key of each time sub-segment of each time segment is updated.

Assuming that: when the life cycle of the key is divided into M time segments, a value of i is 0,1,2...M-1; and when each time segment is divided into N time sub-segments, a value of r is 0, 1, 2...N-1.

This embodiment of the present application is primarily applied to an asymmetric key encryption solution, in which a public key is public, and a sender of a message uses the public key to encrypt the message; a private key is known to only a receiver of the message, and the receiver uses the private key to decrypt the encrypted message, thereby ensuring transmission security of the message. By updating the private key, security threat caused by leakage of the private key can be reduced.

The security device is a device used to assist implementation of update of the private key, and, in different actual application scenarios, may be applied to a message sending side. The security device generates an update parameter in every time sub-segment of every time segment to trigger update of the private key.

A user's private key of a $0^{th}$ time sub-segment of a $0^{th}$ time segment is generated by using a first random parameter and a key Hash value, where the first random parameter is randomly selected from a preset value set, and the key Hash value is element data that belongs to a first cyclic group of bilinear mapping and is obtained by performing a Hash operation on a time index value of the $0^{th}$ time sub-segment of the $0^{th}$ time segment.

The user's private key of the $0^{th}$ time sub-segment of the $0^{th}$ time segment refers to an initial user's private key. With increase of time, the initial user's private key needs to be updated to reduce harm caused by private key leakage to security. The initial user's private key is generated based on a first cyclic group of bilinear mapping. The key length generated by using bilinear mapping is fixed.

Arithmetic operations may be performed on the first random parameter and the key Hash value to obtain the initial user's private key.

102. When r is 0, generate a user's private key of the $r^{th}$ time sub-segment of the $i^{th}$ time segment by using the update parameter generated when the security device enters the $r^{th}$ time sub-segment of the $i^{th}$ time segment, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment.

103. When r is greater than 0, generate the user's private key of the $r^{th}$ time sub-segment of the $i^{th}$ time segment by using the update parameter generated when the security device enters the $r^{th}$ time sub-segment of the $i^{th}$ time segment, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment.

The private key update performed in the $r^{th}$ time sub-segment of the $i^{th}$ time segment may come in two scenarios depending on the value of r, and therefore, a user's private key of each time sub-segment is generated according to a user's private key of a previous time sub-segment. The previous time sub-segment, when r is 0, refers to the last time sub-segment of a previous time segment (the $(i-1)^{th}$ time segment); and, when r is greater than 0, refers to a previous time sub-segment (the $(r-1)^{th}$ time sub-segment) of a current time segment (the $i^{th}$ time segment).

By using the update parameter, the user's private key of the previous time sub-segment, and the time index value, the update of the user's private key of the $r^{th}$ time sub-segment of the $i^{th}$ time segment can be generated. Specifically, the user's private key may be obtained by using arithmetic operations.

In this embodiment, a user's private key of a $0^{th}$ time sub-segment of a $0^{th}$ time segment is generated by using a preset value set and data in a first cyclic group of bilinear mapping; when an update parameter of a security device is received upon entry into an $r^{th}$ time sub-segment of an $i^{th}$ time segment, a user's private key of the $r^{th}$ time sub-segment of the $i^{th}$ time segment can be generated by using a user's private key of an $(r-1)^{th}$ time sub-segment of an $i^{th}$ time segment or a last time sub-segment of an $(i-1)^{th}$ time segment, the update parameter, and a time index value. The user's private key of the $0^{th}$ time sub-segment of the $0^{th}$ time segment is generated by using bilinear mapping. A bit length of a user's private key generated by using bilinear mapping is short, which simplifies calculation. In key updating, a private key can be updated by using a parameter of a time sub-segment previous to a current time sub-segment, which is simple and highly efficient. In addition, the update and the generation of the private key are irrelevant to a life cycle of the key, and can be implemented only by using a time index value. Therefore, the life cycle of the key can be changed according to an actual application condition, which improves flexibility of updating the key.

In addition, in another embodiment, by using each parameter and a corresponding operation, that the generated user's private key of the $r^{th}$ time sub-segment of the $i^{th}$ time segment belongs to the preset value set or the first cyclic group may be accomplished.

A value included in the preset value set may be specifically a value that has a fixed bit length. Element data in the first cyclic group is also element data that has a fixed bit length. The user's private key of the $r^{th}$ time sub-segment of the i$^{th}$ time segment belongs to the preset value set or the first cyclic group, thereby preventing the bit length of the updated user's private key from increasing with increase of time, further reducing operation complexity, and improving update efficiency.

The first cyclic group may be generated in advance according to a security parameter k. Two q$^{th}$-order cyclic groups, that is, a first cyclic group G1 and a second cyclic group G2, may be generated according to the security parameter k, so that the two q$^{th}$-order cyclic groups satisfy bilinear mapping e: G1×G1→G2, where the first cyclic group G1 is a bilinear mapping cyclic group, k is a natural number, q is a prime number, and k is specifically a bit length of q. A generator of the first cyclic group is p.

The preset value set may be specifically $Z^*_q$, where $Z^*_q$ refers to a remainder set that does not include a value 0 and is obtained by performing a modulo operation between an integer set Z and q, that is, $Z_q$= Z mod q, where $Z^*_q$ is a value set that is in Zq and does not include the value 0. Because q is a prime number, $Z^*_q$ can form a finite value range in which a value included has a finite bit length.

The key Hash value is the element data that belongs to the first cyclic group of bilinear mapping and is obtained by performing a Hash operation on the time index value (0, 0) of the 0$^{th}$ time sub-segment of the 0$^{th}$ time segment. That is, (0, 0) is mapped into the first cyclic group by using the Hash operation, that is, belongs to element data in the first cyclic group.

To further improve security, in another embodiment, the update parameter generated by the security device in the r$^{th}$ time sub-segment of the i$^{th}$ time segment may be generated by using a device's private key of the r$^{th}$ time sub-segment of the i$^{th}$ time segment. The user equipment already knows a device's public key of the security device, and therefore, according to the device's public key, identifies whether the received update parameter is sent by the security device, so as to prevent intrusion of an intruder.

The device's private key of the 0$^{th}$ time sub-segment of the 0$^{th}$ time segment is a second random parameter randomly selected from the preset value set; when r is 0, the device's private key of the r$^{th}$ time sub-segment of the i$^{th}$ time segment is generated according to a device's private key of the (r-1)$^{th}$ time sub-segment of the i$^{th}$ time segment and a third random parameter randomly selected from the preset value set; when r is greater than 0, the device's private key of the r$^{th}$ time sub-segment of the i$^{th}$ time segment is generated according to a device's private key of the last time sub-segment of the (i-1)$^{th}$ time segment and the third random parameter randomly selected from the preset value set. In this way, a device's private key of a current time sub-segment includes the third random parameter and a device's private key of a previous time sub-segment.

In this case, the user's private key of the 0$^{th}$ time sub-segment of the 0$^{th}$ time segment may be specifically generated by using the first random parameter, the device's private key of the 0$^{th}$ time sub-segment of the 0$^{th}$ time segment, and a Hash value.

To further improve security, a user's private key may consist of multiple private key parameters. Therefore, in another embodiment, the user's private key may include a first private key parameter and a second private key parameter, where the first private key parameter is primarily used to decrypt a ciphertext.

In this case, the update parameter generated by the security device may specifically include a first update parameter and a second update parameter.

The second update parameter may be specifically used to generate the third random parameter of a device's private key.

When r is 0, the first update parameter may be generated by the security device by using the device's private key of the r$^{th}$ time sub-segment of the i$^{th}$ time segment, the device's private key of the last time sub-segment of the (i-1)$^{th}$ time segment, and the time index values of the r$^{th}$ time sub-segment of the i$^{th}$ time segment and the last time sub-segment of the (i-1)$^{th}$ time segment.

In this case, the operations of step 102 may include:

generating a first private key parameter of the r$^{th}$ time sub-segment of the i$^{th}$ time segment by using the first update parameter and the second update parameter, a first private key parameter and a second private key parameter of the last time sub-segment of the (i-1)$^{th}$ time segment, and element data that belongs to the first cyclic group and is obtained by performing a Hash operation on the time index values of the r$^{th}$ time sub-segment of the i$^{th}$ time segment and the last time sub-segment of the (i-1)$^{th}$ time segment; and

generating a second private key parameter of the r$^{th}$ time sub-segment of the i$^{th}$ time segment by using the second update parameter and the second private key parameter of the last time sub-segment of the (i-1)$^{th}$ time segment, so that the generated first private key parameter does not include the third random parameter and complexity of the private key is reduced.

When r is greater than 0, the first update parameter may be generated by the security device by using the device's private key of the r$^{th}$ time sub-segment of the i$^{th}$ time segment, the device's private key of the (r-1)$^{th}$ time sub-segment of the i$^{th}$ time segment, and the time index values of the r$^{th}$ time sub-segment and the (r-1)$^{th}$ time sub-segment of the ith time segment.

In this case, the operations of step 103 may include:

generating the first private key parameter of the rth time sub-segment of the ith time segment by using the first update parameter and the second update parameter, a first private key parameter and a second private key parameter of the (r-1)th time sub-segment of the ith time segment, and element data that belongs to the first cyclic group and is obtained by performing a Hash operation on the time index values of the rth time sub-segment and the (r-1)th time sub-segment of the ith time segment; and

generating the second private key parameter of the rth time sub-segment of the ith time segment by using the second private key parameter of the (r-1)th time sub-segment of the ith time segment and the second update parameter, so that the generated first private key parameter does not include the third random parameter and complexity of the private key is reduced.

In order to cause the first private key parameter of the generated user's private key to belong to the first cyclic group of bilinear mapping, the element data that belongs to the first cyclic group may be obtained by performing a Hash operation on the time index values of the rth time sub-segment of the ith time segment and the last time sub-segment of the (i-1)th time segment, or the element data that belongs to the first cyclic group may be obtained by performing a Hash operation on the time index values of the rth time sub-segment of the (r-1)th time sub-segment of the ith time segment, and then the obtained element data of the first cyclic group and other parameters such as the first update parameter, the second update parameter, and the first private key parameter and the second private key parameter of a time sub-segment previous to the current time sub-segment may undergo calculation that satisfies a bilinear mapping nature, so that the first private key parameter belongs to the first cyclic group and hence the first private key parameter has a fixed bit length which does not increase with increase of time.

A first private key parameter of the 0th time sub-segment of the 0th time segment may be specifically generated by using the first random parameter, the key Hash value, and the device's private key of the 0th time sub-segment of the 0th time segment of the security device, where a second private key parameter is specifically the first random parameter.

The first random parameter belongs to the preset value set. The second private key parameter of the rth time sub-segment of the ith time segment is generated by using the second private key parameter of the (r-1)th time sub-segment of the ith time segment and the second update parameter, so that the second private key parameter belongs to the preset value set. Therefore, convergence of a calculation result is ensured, the calculation result is simple, and a bit length of the second private key parameter is also ensured.

The first private key parameter and the second private key parameter of the rth time sub-segment of the ith time segment may be specifically obtained, by calculation, according to a private key update formula. The private key update formula specifies a specific operation process of generating the user's private key of the current time sub-segment by using the update parameter, the time index values, and the user's private key of the previous time sub-segment. In a possible operation manner, FIG. 2 shows a flowchart of another embodiment of a key processing method according to an embodiment of the present application. The method may include the following steps:

201. A user equipment obtains a qth-order first cyclic group G1 and a qth-order second cyclic group G2 that are generated according to a security parameter k, where the two qth-order cyclic groups satisfy bilinear mapping e: G1×G1→G2.
q is a prime number, and k is a bit length of q.
202. Obtain a private key update message provided by a security device.

The private key update message includes a first update parameter and a second update parameter that are generated when the security device enters an rth time sub-segment of an ith time segment.
i and r represent time index values and both are integers greater than or equal to 0.
203. When r is 0, generate a user's private key of the rth time sub-segment of the ith time segment according to a private key update formula by using the first update parameter and the second update parameter that are generated when the security device enters the rth time sub-segment of the ith time segment, a first private key parameter and a second private key parameter of a last time sub-segment of an (i-1)th time segment, and time index values of the rth time sub-segment of the ith time segment and the last time sub-segment of the (i-1)th time segment.
The private key update formula may be:

$$S_{t,r} = S_{i-1,RN[i-1]} + SKR_{i,r} - \sigma H_1(i,r) + u_{i-1,RN[i-1]}(H_1(i,r) - H_1(i-1,RN[i-1])) \quad ;$$

13

and

$$u_{i,r} = u_{i\text{-}1,RN[i-1]} - \sigma,$$

where:

$S_{i,r}$ represents the first private key parameter of the $r^{th}$ time sub-segment of the $i^{th}$ time segment, $u_{i,r}$ represents the second private key parameter of the $r^{th}$ time sub-segment of the $i^{th}$ time segment, $S_{i-1,RN[i-1]}$ represents the first private key parameter of the last time sub-segment of the $(i-1)^{th}$ time segment; and $u_{i-1,RN[i-1]}$ represents the second private key parameter of the last time sub-segment of the $(i-1)^{th}$ time segment.
$SKR_{i,r}$ represents the first update parameter of the $r^{th}$ time sub-segment of the $i^{th}$ time segment, and $\sigma$ represents the second update parameter of the $r^{th}$ time sub-segment of the $i^{th}$ time segment.
$RN[i-1]$ represents the time index value of the last time sub-segment of the $(i-1)^{th}$ time segment.
$H_1(i,r)$ represents element data that belongs to the first cyclic group and is obtained by performing a Hash operation on i and r, and $H_1(i\text{-}1,RN[i\text{-}1])$ represents element data that belongs to the first cyclic group and is obtained by performing a Hash operation on i-1 and $RN[i\text{-}1]$.

204. Generate the user's private key of the $r^{th}$ time sub-segment of the $i^{th}$ time segment according to a private key refresh formula by using the first update parameter and the second update parameter that are generated when the security device enters the $r^{th}$ time sub-segment of the $i^{th}$ time segment, the time index value i, and a first private key parameter and a second private key parameter of an $(r-1)^{th}$ time sub-segment of the $i^{th}$ time segment.

The private key refresh formula is:

$$S_{i,r} = S_{i,r-1} + SKR_{i,r} - \sigma H_1(i,r) + u_{i,r-1}(H_1(i,r) - H_1(i,r-1));$$

and

$$u_{i,r} = u_{i,r-1} - \sigma,$$

where:

$H_1(i,r\text{-}1)$ represents element data that belongs to the first cyclic group and is obtained by performing a Hash operation on i and r-1.

The first update parameter and the second update parameter that are generated by the security device in the to time sub-segment of the $i^{th}$ time segment may be specifically generated by using a device's private key of the $r^{th}$ time sub-segment of the $i^{th}$ time segment.

The device's private key of the $r^{th}$ time sub-segment of the $i^{th}$ time segment is generated by using a device's private key of the $(r-1)^{th}$ time sub-segment of the $i^{th}$ time segment or the last time sub-segment of the $(i-1)^{th}$ time segment, and a third random parameter randomly selected from the preset value set; and a device's private key of a $0^{th}$ time sub-segment of a $0^{th}$ time segment is a second random parameter randomly selected from the preset value set.

The second update parameter may be specifically the third random parameter.

In a possible implementation manner, when r is 0, the first update parameter may be specifically generated by the security device according to a first parameter generation formula by using the device's private key of the $r^{th}$ time sub-segment of the $i^{th}$ time segment, a device's private key of the last time sub-segment of the $(i-1)^{th}$ time segment, and the element data that belongs to the first cyclic group and is obtained by performing a Hash operation on the time index values of the $r^{th}$ time sub-segment of the $i^{th}$ time segment and the last time sub-segment of the $(i-1)^{th}$ time segment.

The first parameter generation formula may be:

$$SKR_{i,r} = b_{i,r}H_1(i,r) - b_{i-1,RN[i-1]}H_1(i-1,RN[i-1]),$$

where:

$b_{i,r}$ represents the device's private key of the $r^{th}$ time sub-segment of the $i^{th}$ time segment, and $b_{i-1,NR[i-1]}$ represents the device's private key of the last time sub-segment of the $(i-1)^{th}$ time segment.

$b_{i,r}=b_{i-1,RN[i-1]}+\delta$, where $\delta$ is the third random parameter.

It may be learned from the foregoing description that, the third random parameter $\delta$ is the same as the second update parameter $\sigma$ in this case.

When r is greater than 0, the first update parameter may be specifically generated by the security device according to a second parameter generation formula by using the device's private key of the $r^{th}$ time sub-segment of the $i^{th}$ time segment, the device's private key of the $(r-1)^{th}$ time sub-segment of the $i^{th}$ time segment, and the element data that belongs to the first cyclic group and is obtained by performing a Hash operation on the time index values of the $r^{th}$ time sub-segment and the $(r-1)^{th}$ time sub-segment of the $i^{th}$ time segment.

The second parameter generation formula is:

$$SKR_{i,r} = b_{i,r}H_1(i,r) - b_{i,r-1}H_1(i,r-1);$$

and

$$b_{i,r} = b_{i,r-1} + \delta,$$

where:

$b_{i,r-1}$ represents the device's private key of the $(r-1)^{th}$ time sub-segment of the $i^{th}$ time segment.

In this embodiment, a user's private key of the $0^{th}$ time sub-segment of the $0^{th}$ time segment may be specifically generated according to a private key generation formula by using the first random parameter, the device's private key of the $0^{th}$ time sub-segment of the $0^{th}$ time segment, and the key Hash value.

The private key generation formula may be:

$$S_{0,0} = u_{0,0}H_1(0,0) + b_{0,0}H_1(0,0),$$

where:

$S_{0,0}$ represents a first private key parameter of the $0^{th}$ time sub-segment of the $0^{th}$ time segment, $u_{0,0}$ is the first random parameter, where the first random parameter is a second private key parameter of the $0^{th}$ time sub-segment of the $0^{th}$ time segment, $H_1(0,0)$ is a Hash value of the $0^{th}$ time sub-segment of the $0^{th}$ time segment, and $b_{0,0}$ is the device's private key of the $0^{th}$ time sub-segment of the $0^{th}$ time segment, that is, the second random parameter.

The user's private key is updated by using the first update parameter and the second update parameter that are generated according to the first parameter generation formula and the second parameter generation formula. With the generated user's private key, the first private key parameter does not include the third random parameter, which simplifies the generated user's private key. The second private key parameter belongs to the preset value set, which ensures convergence of a calculation result and reduces operation complexity.

205. Receive a ciphertext generated by encrypting target data by using a user's public key and a target time index value.

The user's public key is generated according to a public key generation formula by using a generator of the first cyclic group, and the device's private key and the first private key parameter of the $0^{th}$ time sub-segment of the $0^{th}$ time segment, where the public key generation formula is:

$$PK_B = b_{0,0}P, \quad P_{pub} = u_{0,0}P,$$

where:

$PK_B$ is a first public key parameter, $P_{pub}$ is a second public key parameter, and $P$ is the generator of the first cyclic group; and

therefore, the ciphertext is specifically obtained according to an encryption formula, where the encryption formula is:

$$V = M \oplus H_2(e(P_{pub} + PK_B, H_1(i,r))^x);$$

and

$$U = xP,$$

where:

x is a fourth random parameter randomly selected from the preset value set, M is the target data, the ciphertext includes U, V, i, and r; and $H_2(e(P_{pub}+PK_B,H_1(i,r))^x)$ represents element data that belongs to the second cyclic group and is obtained by performing a Hash operation on $e(P_{pub} + PK_B, H_1(i,r))^x$ $e(P_{pub}+PK_B,H_1(i,r))^x$ represents element data that belongs to the first cyclic group and is obtained by performing bilinear mapping for $P_{pub}$ + $PK_B$ and $H_1(i,r)$.

206. Decrypt the ciphertext by using a user's private key corresponding to the target time index value, so as to obtain the target data.

When the ciphertext includes U, V, i, and r, the decrypting the ciphertext by using a user's private key corresponding to the time index value, so as to obtain the target data, is specifically: obtaining the target data according to a decryption formula by using the user's private key corresponding to the time index value.

The decryption formula may be:

$$M = V \oplus H_2\big(e(U, S_{i,r})\big),$$

where
$H_2(e(U,S_{i,r}))$ represents element data that belongs to the second cyclic group and is obtained by performing a Hash operation on $e(U,S_{i,r})$. $e(U,S_{i,r})$ represents element data that belongs to the second cyclic group and is obtained by performing bilinear mapping for $U$ and $S_{i,r}$.

In this embodiment, on a precondition of ensuring security against key leakage, a user's private key of each time sub-segment, which is generated by using bilinear mapping, improves update efficiency and accomplishes applicability in different user equipments. In key updating, a private key can be updated by using a parameter of a time sub-segment previous to a current time sub-segment, which is simple and highly efficient. In addition, the update and the generation of the private key are irrelevant to a life cycle of the key, and can be implemented only by using a time index value. Therefore, the life cycle of the key can be changed according to an actual application condition, which improves flexibility of updating the key and is applicable to different application scenarios.

In practical application of the foregoing embodiment, update of a user's private key is specifically performed by a user equipment, and a security device generates an update parameter to trigger the user equipment to update the user's private key. The security device is located on a message sending side, a public key may be generated on the message sending side, and an initial user's private key may be generated by the user equipment on the message sending side or a message receiving side. Key processing in this embodiment of the present application is applicable to different scenarios that require encryption of a transmitted message, for example, in a communications system or a financial system. The security device is located on the message sending side, so that the user equipment on the message receiving side can be triggered to perform automatic update of the user's private key, which reduces threat caused by key leakage to the system and is simple, efficient and highly flexible.

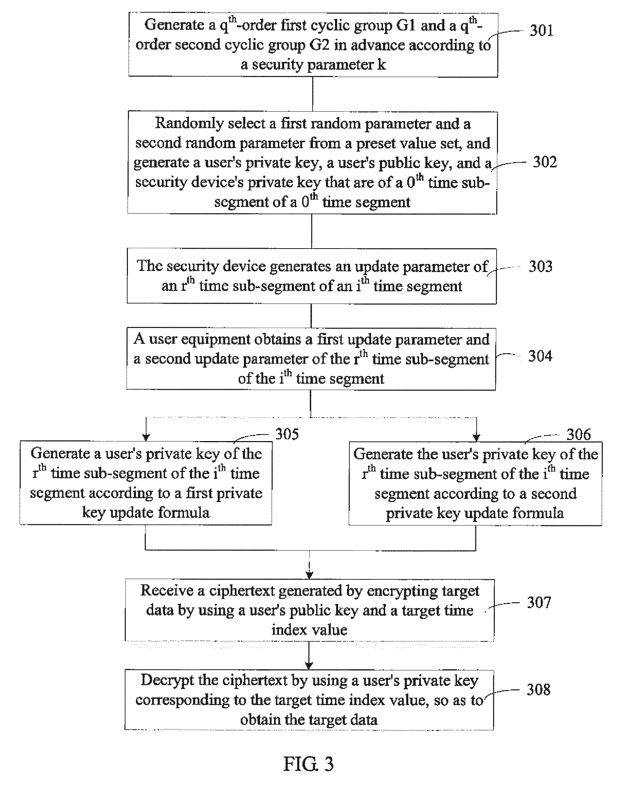

FIG. 3 is a flowchart of another embodiment of a key processing method according to an embodiment of the present application. The method may include the following steps:

301. Generate a $q^{th}$-order first cyclic group G1 and a $q^{th}$-order second cyclic group G2 in advance according to a security parameter k.

The two $q^{th}$-order cyclic groups satisfy bilinear mapping e: G1×G1→G2, where q is a prime number, and k is a bit length of q.

302. Randomly select a first random parameter and a second random parameter from a preset value set, and generate a user's private key, a user's public key, and a security device's private key that are of a 0th time sub-segment of a 0th time segment.

A user's private key of any one time sub-segment includes a first private key parameter and a second private key parameter, and a user's public key includes a first public key parameter and a second public key parameter.

Specifically, the first public key parameter and the second public key parameter may be generated by using a public key generation formula, and a first private key parameter of the 0th time sub-segment of the 0th time segment may be generated by using a private key generation formula, where a second private key parameter is specifically the first random parameter. The device's private key of the 0th time sub-segment of the 0th time segment is specifically the second random parameter.

The private key generation formula may be:

$$S_{0,0} = u_{0,0}H_1(0,0) + b_{0,0}H_1(0,0).$$

The public key generation formula may be:

$$PK_B = b_{0,0}P, \quad P_{pub} = u_{0,0}P.$$

The operations of steps 301 and 302 may be performed on the message sending side in advance.

303. When entering an rth time sub-segment of an ith time segment, the security device generates an update parameter and sends an update message that carries the update parameter to a user equipment.

The update parameter includes a first update parameter and a second update parameter.

The second update parameter is a third random parameter randomly selected from a preset value set.

Specifically, when r is 0, the update parameter is generated according to a first parameter generation formula by using a device's private key of the rth time sub-segment of the ith time segment, a device's private key of the last time sub-segment of an (i-1)th time segment, and time index values of the rth time sub-segment of the ith time segment and the last time sub-segment of the (i-1)th time segment.

The first parameter generation formula is:

$$SKR_{i,r} = b_{i,r}H_1(i,r) - b_{i-1,RN[i-1]}H_1(i-1,RN[i-1]),$$

where:

$b_{i,r} = b_{i-1,RN[i-1]} + \delta$, and $\delta$ is the third random parameter.

When r is greater than 0, the update parameter is generated according to a second parameter generation formula by using the device's private key of the rth time sub-segment of the ith time segment, a device's private key of an (r-1)th time sub-segment of the ith time segment, and time index values of the rth time sub-segment and the (r-1)th time sub-segment of the ith time segment.

The second parameter generation formula is:

$$SKR_{i,r} = b_{i,r}H_1(i,r) - b_{i,r-1}H_1(i,r-1),$$

where:

$$b_{i,r} = b_{i,r-1} + \delta.$$

For detailed description of each parameter, reference may be made to the description in the foregoing embodiment, which is not repeatedly described herein.

304. The user equipment obtains a first update parameter and a second update parameter of the rth time sub-segment of the ith time segment.

305. When r is 0, generate a user's private key of the rth time sub-segment of the ith time segment according to a first private key update formula by using the first update parameter and the second update parameter that are generated by the security device, a first private key parameter and a second private key parameter of the last time sub-segment of an (i-1)th time segment, and time index values of the rth time sub-segment of the ith time segment and the last time sub-segment of the (i-1)th time segment.

The first private key update formula may be:

$$S_{i,r} = S_{i-1,RN[i-1]} + SKR_{i,r} - \sigma H_1(i,r) + u_{i-1,RN[i-1]}(H_1(i,r) - H_1(i-1,RN[i-1])) \quad ;$$

and

$$u_{i,r} = u_{i-1,RN[i-1]} - \sigma$$

Because the second update parameter is the third random parameter, the parameter $\delta$ is the same as the parameter $\sigma$ in this case.

306. When r is greater than 0, generate the user's private key of the rth time sub-segment of the ith time segment according to a second private key update formula by using the first update parameter and the second update parameter that are generated by the security device, a first private key parameter and a second private key parameter of the (r-1)th time sub-segment of the ith time segment, and time index values of the rth time sub-segment and the (r-1)th of time sub-segment of the ith time segment.

The second private key update formula may be:

$$S_{i,r} = S_{i,r-1} + SKR_{i,r} - \sigma H_1(i,r) + u_{i,r-1}(H_1(i,r) - H_1(i,r-1));$$

and

$$u_{i,r} = u_{i,r-1} - \sigma.$$

307. Receive a ciphertext generated by encrypting target data by using a user's public key and a target time index value.

308. Decrypt the ciphertext by using a user's private key corresponding to the target time index value, so as to obtain the target data.

For operations of steps 307 to 308, refer to the description in steps 205 to 206 in the foregoing embodiment.

This embodiment implements simple and efficient key update, and is highly flexible and may be applicable to scenarios in which the life cycle of a key is of any length.

For ease of description, each of the foregoing method embodiments is described as a combination of a series of actions. However, a person skilled in the art should understand that the present application is not limited to the sequence of the described actions, because certain steps according to the present application may be performed in other sequences or concurrently. In addition, a person skilled in the art should also understand that the embodiments described herein are exemplary embodiments, and the involved actions and modules mentioned are not necessarily required by the present application.

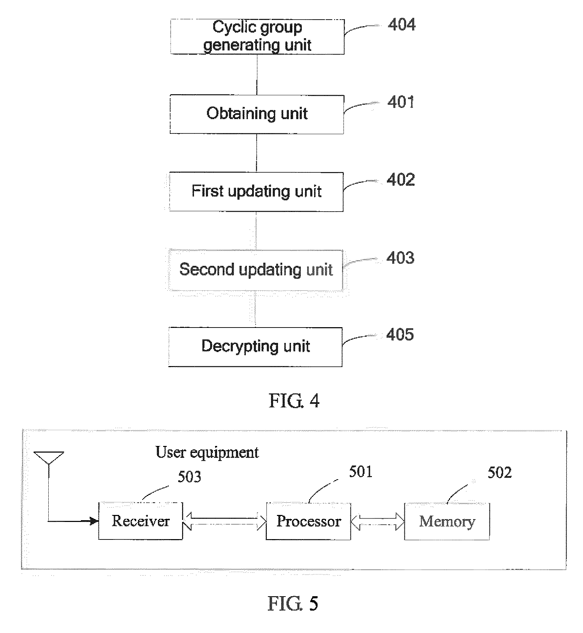

FIG. 4 is a schematic structural diagram of an embodiment of a key processing apparatus according to an embodiment of the present application. This apparatus may include:

an obtaining unit 401, configured to obtain a private key update message provided by a security device, where the private key update message includes an update parameter generated when the security device enters an rth time sub-segment of an ith time segment, where i and r represent time index values and both are integers greater than or equal to 0;

a first updating unit 402, configured to: generate, when r is 0, a user's private key of the rth time sub-segment of the ith time segment by using the update parameter generated when the security device enters the rth time sub-segment of the $i^{th}$ time segment, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and a second updating unit 403, configured to: generate, when r is greater than 0, the user's private key of the $r^{th}$ time sub-segment of the $i^{th}$ time segment by using the update parameter generated when the security device enters the $r^{th}$ time sub-segment of the $i^{th}$ time segment, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, where:

a user's private key of a $0^{th}$ time sub-segment of a $0^{th}$ time segment is generated by using a first random parameter and a key Hash value, where the first random parameter is randomly selected from a preset value set, and the key Hash value is element data that belongs to a first cyclic group of bilinear mapping and is obtained by performing a Hash operation on a time index value of the $0^{th}$ time sub-segment of the $0^{th}$ time segment.

In this embodiment, a user's private key of a $0^{th}$ time sub-segment of a $0^{th}$ time segment is generated by using a preset value set and data in a first cyclic group of bilinear mapping; when an update parameter of a security device is received upon entry into an $r^{th}$ time sub-segment of an $i^{th}$ time segment, a user's private key of the $r^{th}$ time sub-segment of the $i^{th}$ time segment can be generated by using a user's private key, the update parameter, and a time index value that are of an $(r-1)^{th}$ time sub-segment of an $i^{th}$ time segment or a last time sub-segment of an $(i-1)^{th}$ time segment. The user's private key of the $0^{th}$ time sub-segment of the $0^{th}$ time segment is generated by using the preset value set and the data in the first cyclic group of bilinear mapping. A bit length of a user's private key generated by using bilinear mapping is short, which simplifies calculation. In key updating, a private key can be updated by using a parameter of a time sub-segment previous to a current time sub-segment, which is simple and highly efficient. In addition, the update and the generation of the private key are irrelevant to a life cycle of the key, and can be implemented only by using a time index value. Therefore, the life cycle of the key can be changed according to an actual application condition, which improves flexibility of updating the key.

In another embodiment, the update parameter of the $r^{th}$ time sub-segment of the $i^{th}$ time segment is generated by the security device by using a device's private key of the $r^{th}$ time sub-segment of the $i^{th}$ time segment, where a device's private key of the $0^{th}$ time sub-segment of the $0^{th}$ time segment is a second random parameter randomly selected from the preset value set; and the device's private key of the $r^{th}$ time sub-segment of the $i^{th}$ time segment is generated by using a device's private key of the $(r-1)^{th}$ time sub-segment of the $i^{th}$ time segment or the last time sub-segment of the $(i-1)^{th}$ time segment, and a third random parameter randomly selected from the preset value set.

Therefore, the user's private key of the $0^{th}$ time sub-segment of the $0^{th}$ time segment is specifically generated by using the first random parameter, the device's private key of the $0^{th}$ time sub-segment of the $0^{th}$ time segment, and the key Hash value.

In still another embodiment, a user's private key includes a first private key parameter and a second private key parameter, and the update parameter includes a first update parameter and a second update parameter.

The first updating unit may be specifically configured to: obtain, when r is 0, element data by performing a Hash operation on the time index values of the $r^{th}$ time sub-segment of the $i^{th}$ time segment and the last time sub-segment of the $(i-1)^{th}$ time segment, where the element data belongs to the first cyclic group; generate a first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the last time sub-segment of the $(i-1)^{th}$ time segment; and, generate a second private key parameter of the $r^{ft}$ time sub-segment of the $i^{th}$ time segment by using the second update parameter generated when the security device enters the $r^{th}$ time sub-segment of the $i^{th}$ time segment and the second private key parameter of the last time sub-segment of the $(i-1)^{th}$ time segment.

The second updating unit may be specifically configured to: obtain, when r is greater than 0, the element data by performing a Hash operation on the time index values of the $r^{th}$ time sub-segment and the $(r-1)^{th}$ time sub-segment of the $i^{th}$ time segment, where the element data belongs to the first cyclic group; generate the first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the $(r-1)^{th}$ time sub-segment of the $i^{th}$ time segment; and generate the first private key parameter of the $r^{th}$ time sub-segment of the $i^{th}$ time segment by using the second private key parameter of the $(r-1)^{th}$ time sub-segment of the $i^{th}$ time segment and the second update parameter generated when the security device enters the $r^{th}$ time sub-segment of the $i^{th}$ time segment.

In yet another embodiment, the first updating unit may be specifically configured to: generate, when r is 0, the user's private key of the $r^{th}$ time sub-segment of the $i^{th}$ time segment according to a first private key update formula by using the first update parameter and the second update parameter that are generated when the security device enters the $r^{th}$ time sub-segment of the $i^{th}$ time segment, the first private key parameter and the second private key parameter of the last time sub-segment of the (i-1)$^{th}$ time segment, and the time index values of the r$^{th}$ time sub-segment of the i$^{th}$ time segment and the last time sub-segment of the (i-1)$^{th}$ time segment.

The first private key update formula includes:

$$S_{i,r} = S_{i-1,RN[i-1]} + SKR_{i,r} - \sigma H_1(i,r) + u_{i-1,RN[i-1]}(H_1(i,r) - H_1(i-1,RN[i-1])) \quad ;$$

and

$$u_{i,r} = u_{i-1,RN[i-1]} - \sigma$$

The second updating unit may be specifically configured to: when r is greater than 0, generate the user's private key of the r$^{th}$ time sub-segment of the i$^{th}$ time segment according to a second private key update formula by using the first update parameter and the second update parameter that are generated when the security device enters the r$^{th}$ time sub-segment of the i$^{th}$ time segment, the first private key parameter and the second private key parameter of the (r-1)$^{th}$ time sub-segment of the i$^{th}$ time segment, and the time index values of the r$^{th}$ time sub-segment and the (r-1)$^{th}$ time sub-segment of the i$^{th}$ time segment.

The second private key update formula is:

$$S_{i,r} = S_{i,r-1} + SKR_{i,r} - \sigma H_1(i,r) + u_{i,r-1}(H_1(i,r) - H_1(i,r-1));$$

and

$$u_{i,r} = u_{i,r-1} - \sigma,$$

where:

the user's private key of the 0$^{th}$ time sub-segment of the 0$^{th}$ time segment is specifically generated according to a key generation formula by using the first random parameter, the device's private key of the 0$^{th}$ time sub-segment of the 0$^{th}$ time segment, and a Hash value.

The key generation formula is:

$$S_{0,0} = u_{0,0}H_1(0,0) + b_{0,0}H_1(0,0).$$

The second update parameter is the third random parameter.

When r is 0, the first update parameter is specifically generated by the security device according to a first parameter generation formula by using the device's private key of the r$^{th}$ time sub-segment of the i$^{th}$ time segment, a device's private key of the last time sub-segment of the (i-1)$^{th}$ time segment, and the element data that belongs to the first cyclic group and is obtained by performing a Hash operation on the time index values of the r$^{th}$ time sub-segment of the i$^{th}$ time segment and the last time sub-segment of the (i-1)$^{th}$ time segment.

The first parameter generation formula is:

$$SKR_{i,r} = b_{i,r}H_1(i,r) - b_{i-1,RN[i-1]}H_1(i-1,RN[i-1]),$$

where:

$b_{i,r}$ represents the device's private key of the r$^{th}$ time sub-segment of the i$^{th}$ time segment, $b_{i-1,RN[i-1]}$ represents the device's private key of the last time sub-segment of the (i-1)$^{th}$ time segment, $b_{i,r} = b_{i-1,RN[i-1]} + \delta$ and $\delta$ is the third random parameter.

When r is greater than 0, the first update parameter is specifically generated by the security device according to a second parameter generation formula by using the device's private key of the $r^{th}$ time sub-segment of the $i^{th}$ time segment, a device's private key of the $(r-1)^{th}$ time sub-segment of the $i^{th}$ time segment, and the element data that belongs to the first cyclic group and is obtained by performing a Hash operation on the time index values of the $r^{th}$ time sub-segment and the $(r-1)^{th}$ time sub-segment of the $i^{th}$ time segment.

The second parameter generation formula is:

$$SKR_{i,r} = b_{i,r}H_1(i,r) - b_{i,r-1}H_1(i,r-1),$$

where:

$b_{i,r-1}$ represents the device's private key of the $(r-1)^{th}$ time sub-segment of the $i^{th}$ time segment, and $b_{i,r} = b_{i,r-1} + \delta$.

In still another embodiment, the apparatus may further include:

a cyclic group generating unit 404, configured to generate a $q^{th}$-order first cyclic group G1 and a $q^{th}$-order second cyclic group G2 according to a security parameter k, so that the two $q^{th}$-order cyclic groups satisfy bilinear mapping e: G1×G1→G2, where q is a prime number, and k is a bit length of q, where:

the preset value set is $Z^*_q$, where $Z^*_q$ represents a remainder set that does not include a value 0 and is obtained by performing a modulo operation between an integer set Z and q; and
a decrypting unit 405, configured to: decrypt, when a ciphertext obtained by encrypting target data by using a public key and a target time index value is received, the ciphertext by using a user's private key corresponding to the target time index value, so as to obtain the target data, where:

the public key may be generated according to a public key generation formula by using a generator of the first cyclic group, and the device's private key and the first private key parameter of the $0^{th}$ time sub-segment of the $0^{th}$ time segment, where the public key generation formula is:

$$PK_B = b_{0,0}P, \quad P_{pub} = u_{0,0}P,$$

where:
$PK_B$ is a first public key parameter, $P_{pub}$ is a second public key parameter, and P is the generator of the first cyclic group.

The ciphertext is specifically obtained according to an encryption algorithm, where the encryption formula is:

$$V = M \oplus H_2(e(P_{pub} + PK_B, H_1(i,r))^x);$$

and

$$U = xP,$$

where:

x is a fourth random parameter randomly selected from the preset value set, M is the target data, the ciphertext includes U, V, i, and r; and $H_2(e(P_{pub} + PK_B, H_1(i,r))^x)$ represents element data that belongs to the second cyclic group and is obtained by performing a Hash operation on $e(P_{pub} + P_{KB}, H_1(i,r))^x$

Therefore, the decrypting unit may be specifically configured to obtain the target data according to a decryption formula by using a user's private key corresponding to the time index value, where the decryption formula is:

$$M = V \oplus H_2\left(e(U, S_{i,r})\right).$$

The key processing apparatus in the foregoing embodiment may be integrated into a user equipment in practical application, where the user equipment may be a radio communications device, for example, may be a mobile device such as a mobile phone and a tablet computer. The user equipment equipped with the key processing apparatus of this embodiment of the present application can implement update of a private key simply and efficiently, and ensure security of cryptosystem.

It may be learned from the foregoing description that, a person skilled in the art may clearly understand that the present application may be implemented by using software in addition to a necessary universal hardware platform. Therefore, referring to FIG. 5, an embodiment of the present application further provides a user equipment. The user equipment may include at least a processor 501, and a memory 502 and a receiver 503 that are connected to the processor 501 separately by using a bus.

The memory 502 stores a group of program instructions, and this memory may be a high-speed RAM memory and may also be a non-volatile memory (non-volatile memory), such as, at least one disk memory.

The processor 501 is configured to invoke the program instructions stored in the memory 502 to execute the following operations:

triggering the receiver 503 to obtain a private key update message provided by a security device, where the private key update message includes an update parameter generated when the security device enters an $r^{th}$ time sub-segment of an $i^{th}$ time segment, where i and r represent time index values and both are integers greater than or equal to 0;

generating, when r is 0, a user's private key of the $r^{th}$ time sub-segment of the $i^{th}$ time segment by using the update parameter generated when the security device enters the $r^{th}$ time sub-segment of the $i^{th}$ time segment, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and

generating, when r is greater than 0, the user's private key of the $r^{th}$ time sub-segment of the $i^{th}$ time segment by using the update parameter generated when the security device enters the $r^{th}$ time sub-segment of the $i^{th}$ time segment, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, where:

a user's private key of a $0^{th}$ time sub-segment of a $0^{th}$ time segment is generated by using a first random parameter and a key Hash value, where the first random parameter is randomly selected from a preset value set, and the key Hash value is element data that belongs to a first cyclic group of bilinear mapping and is obtained by performing a Hash operation on a time index value of the $0^{th}$ time sub-segment of the $0^{th}$ time segment.

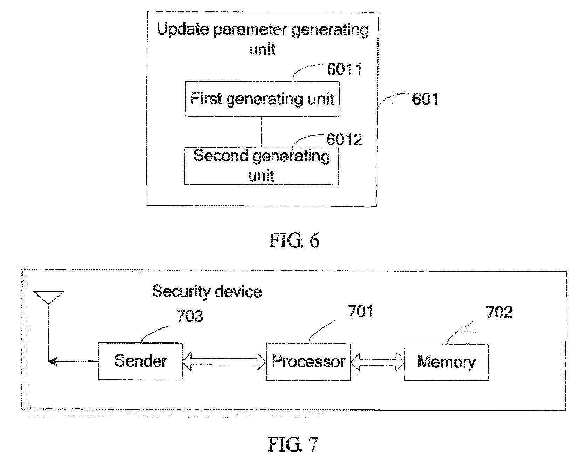

FIG. 6 is a schematic structural diagram of another embodiment of a key processing apparatus according to an embodiment of the present application. This apparatus may include:

an update parameter generating unit, configured to: generate an update parameter upon entry into an $r^{th}$ time sub-segment of an $i^{th}$ time segment, and send the update parameter to a user equipment, where the update parameter is used to instruct the user equipment to: when r is 0, generate a user's private key of the $r^{th}$ time sub-segment of the $i^{th}$ time segment by using the update parameter, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and, when r is greater than 0, generate the user's private key of the $r^{th}$ time sub-segment of the $i^{th}$ time segment by using the update parameter, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, where:

a user's private key of a $0^{th}$ time sub-segment of a $0^{th}$ time segment is generated by using a first random parameter and a key Hash value, where the first random parameter is randomly selected from a preset value set, and the key Hash value is element data that belongs to a first cyclic group and is obtained by performing a Hash operation on a time index value of the $0^{th}$ time sub-segment of the $0^{th}$ time segment.

The update parameter of the $r^{th}$ time sub-segment of the $i^{th}$ time segment may be specifically generated by the security device by using a device's private key of the $r^{th}$ time sub-segment of the $i^{th}$ time segment, where a device's private key of the $0^{th}$ time sub-segment of the $0^{th}$ time segment is a second random parameter randomly selected from the preset value set; and the device's private key of the rth time sub-segment of the ith time segment is generated by using a device's private key of the (r-1)th time sub-segment of the ith time segment or the last time sub-segment of the (i-1)th time segment, and a third random parameter randomly selected from the preset value set.

In a possible implementation manner, the update parameter may specifically include a first update parameter and a second update parameter, and a user's private key includes a first private key parameter and a second private key parameter. Therefore, the update parameter generating unit 601 may include:

a first generating unit 6011, configured to: generate, when r is 0, the update parameter according to a first parameter generation formula by using a device's private key of the rth time sub-segment of the ith time segment, a device's private key of the last time sub-segment of the (i-1)th time segment, and the time index values of the rth time sub-segment of the ith time segment and the last time sub-segment of the (i-1)th time segment, where:

the first parameter generation formula is:

$$SKR_{i,r} = b_{i,r}H_1(i,r) - b_{i-1,RN[i-1]}H_1(i-1,RN[i-1]),$$

where:

$b_{i,r}$ represents the device's private key of the rth time sub-segment of the ith time segment, $b_{i-1,RN[i-1]}$ represents the device's private key of the last time sub-segment of the (i-1)th time segment, $b_{i,r} = b_{i-1,RN[i-1]} + \delta$, and $\delta$ is a third random parameter randomly selected from the preset value set; and

a second generating unit 6012, configured to: generate, when the time index value r is greater than 0, the update parameter according to a second parameter generation formula by using the device's private key of the rth time sub-segment of the ith time segment, the device's private key of the (r-1)th time sub-segment of the ith time segment, and the time index values of the rth time sub-segment and the (r-1)th time sub-segment of the ith time segment, where:

the second parameter generation formula is:

$$SKR_{i,r} = b_{i,r}H_1(i,r) - b_{i,r-1}H_1(i,r-1),$$

where:

$b_{i,r-1}$ represents the device's private key of the (r-1)th time sub-segment of the ith time segment, and $b_{i,r} = b_{i,r-1} + \delta$.

The first update parameter and the second update parameter may be specifically used to trigger the user equipment to: when r is 0, generate the user's private key of the rth time sub-segment of the ith time segment according to a first private key update formula by using the first update parameter and the second update parameter, the first private key parameter and the second private key parameter of the last time sub-segment of the (i-1)th time segment, and the time index values of the rth time sub-segment of the ith time segment and the last time sub-segment of the (i-1)th time segment, where:

the first private key update formula includes:

$$S_{i,r} = S_{i-1,RN[i-1]} + SKR_{i,r} - \sigma H_1(i,r) + u_{i-1,RN[i-1]}(H_1(i,r) - H_1(i-1,RN[i-1])) \quad ;$$

and

$$u_{i,r} = u_{i-1,RN[i-1]} - \sigma;$$

and

when r is greater than 0, generate the user's private key of the rth time sub-segment of the ith time segment according to a second private key update formula by using the first update parameter and the second update parameter, the first private key parameter and the second private key parameter of the $(r-1)^{th}$ time sub-segment of the $i^{th}$ time segment, and the time index values of the $r^{th}$ time sub-segment and the $(r-1)^{th}$ time sub-segment of the $i^{th}$ time segment, where:

the second private key update formula is:

$$S_{i,r} = S_{i,r-1} + SKR_{i,r} - \sigma H_1(i,r) + u_{i,r-1}(H_1(i,r) - H_1(i,r-1));$$

$$u_{i,r} = u_{i,r-1} - \sigma,$$

where:

the user's private key of the $0^{th}$ time sub-segment of the $0^{th}$ time segment is specifically generated according to a key generation formula by using the first random parameter, the device's private key of the $0^{th}$ time sub-segment of the $0^{th}$ time segment, and the key Hash value, where:

the key generation formula is:

$$S_{0,0} = u_{0,0}H_1(0,0) + b_{0,0}H_1(0,0),$$

where:

$\sigma$ is the same as $\delta$.

In this embodiment, by using an update parameter of an $r^{th}$ time sub-segment of an $i^{th}$ time segment, a user equipment is triggered to update a user's private key, which makes key update simple, efficient, and highly flexible.

A key processing apparatus in the foregoing embodiment may be integrated into a security device in practical application. This security device may be applicable to a service system that requires cryptosystem, such as a service system of a mobile operator, a public security system, a financial system, and the like, so that an update parameter may be generated in each time sub-segment of different time segments, and a user equipment is triggered to update a key, so that an operation of updating the key is simple, efficient, and highly flexible.

It may be learned from the foregoing description that, a person skilled in the art may clearly understand that the present application may be implemented by using software in addition to a necessary universal hardware platform. Therefore, referring to FIG. 7, an embodiment of the present application further provides a security device. The security device includes at least a processor 701, and a memory 702 and a sender 703 that are connected to the processor 701 separately by using a bus.

The memory 702 stores a group of program instructions, and this memory may be a high-speed RAM memory and may also be a non-volatile memory (non-volatile memory), such as, at least one disk memory.

The processor 701 is configured to invoke the program instructions stored in the memory 702 to execute the following operations:

upon entry into an $r^{th}$ time sub-segment of an $i^{th}$ time segment, generating an update parameter and triggering the sender 703 to send an update message that carries the update parameter to a user equipment, where the update message is used to instruct the user equipment to: when r is 0, generate a user's private key of the $r^{th}$ time sub-segment of the $i^{th}$ time segment by using the update parameter, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and, when r is greater than 0, generate the user's private key of the $r^{th}$ time sub-segment of the $i^{th}$ time segment by using the update parameter, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, where:

a user's private key of a $0^{th}$ time sub-segment of a $0^{th}$ time segment is generated by using a first random parameter and a key Hash value, where the first random parameter is randomly selected from a preset value set, and the key Hash value is element data that belongs to a first cyclic group and is obtained by performing a Hash operation on a time index value of the $0^{th}$ time sub-segment of the $0^{th}$ time segment.

The processor may be a central processing unit CPU, or an application specific integrated circuit ASIC (Application Specific Integrated Circuit), or one or more integrated circuits configured to implement this embodiment of the present invention.

The embodiments of the present specification are described in a progressive manner. The focus of each embodiment is placed on a difference from other embodiments. The same or similar parts of the embodiments can be referenced mutually The apparatus disclosed in the embodiments is described relatively simply because it corresponds to the method disclosed in the embodiments, and for portions related to those of the method, reference may be made to the description of the method.

Finally, it should be noted that in this specification, relational terms such as first and second are used only to differentiate an entity or operation from another entity or operation, and do not necessarily require or imply that any actual relationship or sequence exists between these entities or operations. Moreover, the terms "include", "comprise", or any other variants thereof are intended to cover non-exclusive inclusion, so that a process, a method, an article, or an apparatus that includes a series of elements not only includes those elements but may also include other elements which are not expressly listed, or also include elements inherent to such process, method, article, or apparatus. Without being subject to further limitations, an element defined by a phrase "including a..." does not exclude presence of other identical elements in the process, method, article, or device that includes the very element.

For ease of description, the foregoing apparatus is described by dividing the functions into various units. Surely, when the present application is implemented, the functions of each unit may be implemented in one or more pieces of software and/or hardware.

It may be learned from description of the foregoing implementation manners that, a person skilled in the art may clearly understand that the present application may be implemented by using software in addition to a necessary universal hardware platform. Based on such an understanding, the technical solutions of the present application essentially or the part contributing to the prior art may be implemented in a form of a software product. The software product may be stored in a storage medium, such as a ROM/RAM, a magnetic disk, or an optical disc, and includes several instructions for instructing a computer device (which may be a personal computer, a server, or a network device) to perform the methods described in the embodiments or in some parts of the embodiments of the present application.

The embodiments disclosed above are described to enable a person skilled in the art to implement or use the present application. Various modifications made to the embodiments will be obvious to a person skilled in the art, and the general principles defined herein may also be implemented in other embodiments without departing from the spirit or scope of the present application. Therefore, the present application is not intended to be limited to these embodiments illustrated herein, but shall be construed in the widest scope consistent with the principles and novel features disclosed herein.

## Claims

1. A key processing method, comprising:

   obtaining (101), by a user equipment, a private key update message provided by a security device, wherein the private key update message comprises an update parameter generated when the security device enters an $r^{th}$ time sub-segment of an $i^{th}$ time segment, wherein i and r represent time index values and both are integers greater than or equal to 0;
   generating (102), when r is 0, a user's private key of the $r^{th}$ time sub-segment of the $i^{th}$ time segment by using the update parameter generated when the security device enters the $r^{th}$ time sub-segment of the $i^{th}$ time segment, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and generating (103), when r is greater than 0, the user's private key of the $r^{th}$ time sub-segment of the $i^{th}$ time segment by using the update parameter generated when the security device enters the $r^{th}$ time sub-segment of the $i^{th}$ time segment, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, wherein: a user's private key of a $0^{th}$ time sub-segment of a $0^{th}$ time segment is generated by using a first random parameter and a key Hash value, wherein the first random parameter is randomly selected from a preset value set, and the key Hash value is element data that belongs to a first cyclic group of bilinear mapping and is obtained by performing a Hash operation on a time index value of the $0^{th}$ time sub-segment of the $0^{th}$ time segment,
   wherein a user's private key comprises a first private key parameter and a second private key parameter, and the update parameter comprises a first update parameter and a second update parameter;
said generating (102), when r is 0, comprises:

obtaining, when r is 0, element data by performing a Hash operation on the time index values of the $r^{th}$ time sub-segment of the $i^{th}$ time segment and the last time sub-segment of the $(i-1)^{th}$ time segment, wherein the element data belongs to the first cyclic group; generating a first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the last time sub-segment of the $(i-1)^{th}$ time segment; and

generating a second private key parameter of the $r^{th}$ time sub-segment of the $i^{th}$ time segment by using the second update parameter generated when the security device enters the $r^{th}$ time sub-segment of the $i^{th}$ time segment and the second private key parameter of the last time sub-segment of the $(i-1)^{th}$ time segment; and

said generating (103), when r is greater than 0, comprises:

obtaining, when r is greater than 0, the element data by performing a Hash operation on the time index values of the $r^{th}$ time sub-segment and the $(r-1)^{th}$ time sub-segment of the $i^{th}$ time segment, wherein the element data belongs to the first cyclic group; generating the first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the $(r-1)^{th}$ time sub-segment of the $i^{th}$ time segment; and

generating the second private key parameter of the $r^{th}$ time sub-segment of the $i^{th}$ time segment by using the second private key parameter of the $(r-1)^{th}$ time sub-segment of the $i^{th}$ time segment and the second update parameter generated when the security device enters the $r^{th}$ time sub-segment of the $i^{th}$ time segment.

2. The method according to claim 1, wherein the update parameter of the $r^{th}$ time sub-segment of the $i^{th}$ time segment is generated by the security device by using a device's private key of the $r^{th}$ time sub-segment of the $i^{th}$ time segment, wherein a device's private key of the $0^{th}$ time sub-segment of the $0^{th}$ time segment is a second random parameter randomly selected from the preset value set;

the device's private key of the $r^{th}$ time sub-segment of the $i^{th}$ time segment is generated by using a device's private key of the $(r-1)^{th}$ time sub-segment of the $i^{th}$ time segment or the last time sub-segment of the $(i-1)^{th}$ time segment, and a third random parameter randomly selected from the preset value set; and

therefore, the user's private key of the $0^{th}$ time sub-segment of the $0^{th}$ time segment is specifically generated by using the first random parameter, the device's private key of the $0^{th}$ time sub-segment of the $0^{th}$ time segment, and the key Hash value.

3. The method according to claim 1 or 2, wherein: the obtaining, when r is 0, element data by performing a Hash operation on the time index values of the $r^{th}$ time sub-segment of the $i^{th}$ time segment and the last time sub-segment of the $(i-1)^{th}$ time segment, wherein the element data belongs to the first cyclic group; generating a first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the last time sub-segment of the $(i-1)^{th}$ time segment; and

generating a second private key parameter of the $r^{th}$ time sub-segment of the $i^{th}$ time segment by using the second private key parameter of the last time sub-segment of the $(i-1)^{th}$ time segment and the second update parameter generated when the security device enters the $r^{th}$ time sub-segment of the $i^{th}$ time segment, comprises:

generating, when r is 0, the user's private key of the $r^{th}$ time sub-segment of the $i^{th}$ time segment according to a private key update formula by using the first update parameter and the second update parameter that are generated when the security device enters the $r^{th}$ time sub-segment of the $i^{th}$ time segment, the first private key parameter and the second private key parameter of the last time sub-segment of the $(i-1)^{th}$ time segment, and the time index values of the $r^{th}$ time sub-segment of the $i^{th}$ time segment and the last time sub-segment of the $(i-1)^{th}$ time segment, wherein:

the private key update formula comprises:

$$S_{i,r} = S_{i-1,RN[i-1]} + SKR_{i,r} - \sigma H_1(i,r) + u_{i-1,RN[i-1]}(H_1(i,r) - H_1(i-1,RN[i-1]))$$ ;

and

$$u_{i,r} = u_{i-1,RN[i-1]} - \sigma$$ ,

wherein:

$S_{i,r}$ represents the first private key parameter of the rth time sub-segment of the ith time segment, and $u_{i,r}$ represents the second private key parameter of the rth time sub-segment of the ith time segment; $SKR_{i,r}$ represents the first update parameter of the rth time sub-segment of the ith time segment, and $\sigma$ represents the second update parameter of the rth time sub-segment of the ith time segment; $RN[i\text{-}1]$ represents the time index value of the last time sub-segment of the (i-1)th time segment; $H_1(i,r)$ represents the element data that belongs to the first cyclic group and is obtained by performing a Hash operation on the time index values i and r, and $H_1(i\text{-}1,RN[i\text{-}1])$ represents the element data that belongs to the first cyclic group and is obtained by performing a Hash operation on the time index values i-1 and $RN[i\text{-}1]$;

the obtaining, when r is greater than 0, the element data by performing a Hash operation on the time index values of the rth time sub-segment and the (r-1)th time sub-segment of the ith time segment, wherein the element data belongs to the first cyclic group; generating the first private key parameter of the rth time sub-segment of the ith time segment by using the element data, the first update parameter and the second update parameter that are generated when the security device enters the rth time sub-segment of the ith time segment, and a first private key parameter and a second private key parameter of the (r-1)th time sub-segment of the ith time segment; and generating the second private key parameter of the rth time sub-segment of the ith time segment by using the second private key parameter of the (r-1)th time sub-segment of the ith time segment and the second update parameter, comprises:

generating, when r is greater than 0, the user's private key of the rth time sub-segment of the ith time segment according to a private key refresh formula by using the first update parameter and the second update parameter that are generated when the security device enters the rth time sub-segment of the ith time segment, the first private key parameter and the second private key parameter of the (r-1)th time sub-segment of the ith time segment, and the time index values of the rth time sub-segment and the (r-1)th time sub-segment of the ith time segment, wherein:

the private key refresh formula comprises:

$$S_{i,r} = S_{i,r-1} + SKR_{i,r} - \sigma H_1(i,r) + u_{i,r-1}(H_1(i,r) - H_1(i,r-1))$$ ;

and

$$u_{i,r} = u_{i,r-1} - \sigma$$ ,

wherein:

$H_1(i,r\text{-}1)$ represents the element data that belongs to the first cyclic group and is obtained by performing a Hash operation on the time index values i and r-1; and the user's private key of the 0th time sub-segment of the 0th time segment is specifically generated according to a key generation formula by using the first random parameter, the device's private

key of the 0th time sub-segment of the 0th time segment, and the key Hash value, wherein:

the key generation formula is:

$$S_{0,0} = u_{0,0} H_1(0,0) + b_{0,0} H_1(0,0)$$ ,

wherein:

$S_{0,0}$ represents a first private key parameter of the 0th time sub-segment of the 0th time segment, $u_{0,0}$ is the first random parameter, wherein the first random parameter is a second private key parameter of the 0th time sub-segment of the 0th time segment, $H_1(0,0)$ is a Hash value of the 0th time sub-segment of the 0th time segment, and $b_{0,0}$ is the device's private key of the 0th time sub-segment of the 0th time segment.

4. The method according to claim 1, 2 or 3, wherein the second update parameter is the third random parameter; when r is 0, the first update parameter is specifically generated by the security device according to a first parameter generation formula by using the device's private key of the rth time sub-segment of the ith time segment, the device's private key of the last time sub-segment of the (i-1)th time segment, and the element data that belongs to the first cyclic group and is obtained by performing a Hash operation on the time index values of the rth time sub-segment of the ith time segment and the last time sub-segment of the (i-1)th time segment, wherein:

the first parameter generation formula is:

$$SKR_{i,r} = b_{i,r} H_1(i,r) - b_{i-1,RN[i-1]} H_1(i-1, RN[i-1])$$ ,

wherein:

$b_{i,r}$ represents the device's private key of the rth time sub-segment of the ith time segment, $b_{i-1RN[i-1]}$ represents the device's private key of the last time sub-segment of the (i-1)th time segment, $b_{i,r}=b_{i-1RN[i-1]}+ \delta$, and $\delta$ is the third random parameter; and
when r is greater than 0, the first update parameter is specifically generated by the security device according to a second parameter generation formula by using the device's private key of the rth time sub-segment of the ith time segment, the device's private key of the (r-1)th time sub-segment of the ith time segment, and the element data that belongs to the first cyclic group and is obtained by performing a Hash operation on the time index values of the rth time sub-segment and the (r-1)th time sub-segment of the ith time segment, wherein:

the second parameter generation formula is:

$$SKR_{i,r} = b_{i,r} H_1(i,r) - b_{i,r-1} H_1(i, r-1)$$ ,

wherein:

$b_{i,r-1}$ represents the device's private key of the (r-1)th time sub-segment of the ith time segment, and $b_{i,r} =b_{i,r-1}+ \delta$.

5. The method according to any one of claims 1 to 4, wherein before the obtaining a private key update message provided by a security device, the method further comprises: obtaining a qth-order first cyclic group G1 and a qth-order second cyclic group G2 that are generated according to a security parameter k, wherein the two qth-order cyclic groups satisfy bilinear mapping e: G1×G1→G2, wherein q is a prime number, and k is a bit length of q, wherein:

the preset value set is $Z^*_q$, wherein $Z^*_q$ represents a remainder set that does not comprise a value 0 and is obtained by performing a modulo operation between an integer set Z and q.

**6.** The method according to any one of claims 1 to 5, wherein the method further comprises:

decrypting, when a ciphertext obtained by encrypting target data by using a user's public key and a target time index value is received, the ciphertext by using a user's private key corresponding to the target time index value, so as to obtain the target data.

**7.** The method according to claim 6, wherein the user's public key is generated according to a public key generation formula by using a generator of the first cyclic group, and the device's private key and the first private key parameter of the 0th time sub-segment of the 0th time segment, wherein the public key generation formula is:

$$PK_B = b_{0,0}P, \quad P_{pub} = u_{0,0}P,$$

wherein:

$PK_B$ is a first public key parameter, $P_{pub}$ is a second public key parameter, and $P$ is the generator of the first cyclic group;
therefore, the ciphertext is specifically obtained according to an encryption formula, wherein the encryption formula is:

$$V = M \oplus H_2(e(P_{pub} + PK_B, H_1(i,r))^x);$$

and

$$U = xP,$$

wherein:

x is a fourth random parameter randomly selected from the preset value set, M is the target data, the ciphertext comprises U, V, i, and r; and $H_2(e(P_{pub} + PK_B, H_1(i,r))^x)$ represents element data that belongs to the second cyclic group and is obtained by performing a Hash operation on $e(P_{pub} + PK_B, H_1(i,r))^x$;
therefore, the decrypting the ciphertext by using a user's private key corresponding to the time index value, so as to obtain the target data, is specifically: obtaining the target data according to a decryption formula by using the user's private key corresponding to the time index value, wherein the decryption formula is:

$$M = V \oplus H_2\left(e(U, S_{i,r})\right),$$

wherein:

$H_2(e(U, S_{i,r}))$ represents the element data that belongs to the second cyclic group and is obtained by performing a Hash operation on $e(U, S_{i,r})$.

**8.** A key processing method, comprising:

generating an update parameter when a security device enters an rth time sub-segment of an ith time segment, and sending an update message that carries the update parameter to a user equipment, wherein the update message is used to instruct the user equipment to: when r is 0, generate a user's private key of the rth time sub-segment of the ith time segment by using the update parameter, a user's private key of a last time sub-segment of an (i-1)th time segment, and time index values of the rth time sub-segment of the ith time segment and the last time sub-segment of the (i-1)th time segment; and, when r is greater than 0, generate the user's private key of the rth time sub-segment of the ith time segment by using the update parameter, a user's private key of an (r-1)th time sub-segment of the ith time segment, and time index values of the rth time sub-segment and the (r-1)th time sub-segment of the ith time segment, wherein:

a user's private key of a 0th time sub-segment of a 0th time segment is generated by using a first random parameter and a key Hash value, wherein the first random parameter is randomly selected from a preset value set, and the key Hash value is element data that belongs to a first cyclic group and is obtained by performing a Hash operation on a time index value of the 0th time sub-segment of the 0th time segment, wherein the update parameter comprises a first update parameter and a second update parameter, and a user's private key comprises a first private key parameter and a second private key parameter, and therefore, the generating an update parameter when a security device enters an rth time sub-segment of an ith time segment comprises:

generating, when r is 0, the update parameter according to a first parameter generation formula by using a device's private key of the rth time sub-segment of the ith time segment, a device's private key of the last time sub-segment of the (i-1) time segment, and the time index values of the rth time sub-segment of the ith time segment and the last time sub-segment of the (i-1)th time segment, wherein:

the first parameter generation formula is:

$$SKR_{i,r} = b_{i,r}H_1(i,r) - b_{i-1,RN[i-1]}H_1(i-1,RN[i-1]),$$

wherein:

$b_{i,r}$ represents the device's private key of the rth time sub-segment of the ith time segment, $b_{i-1,RN[i-1]}$ represents the device's private key of the last time sub-segment of the (i-1)th time segment, $b_{i,r}=b_{i-1,RN[i-1]}+ \delta$, and $\delta$ is a third random parameter randomly selected from the preset value set; and

generating, when r is greater than 0, the update parameter according to a second parameter generation formula by using the device's private key of the rth time sub-segment of the ith time segment, the device's private key of the (r-1)th time sub-segment of the ith time segment, and the time index values of the rth time sub-segment and the (r-1)th time sub-segment of the ith time segment, wherein:

the second parameter generation formula is:

$$SKR_{i,r} = b_{i,r}H_1(i,r) - b_{i,r-1}H_1(i,r-1),$$

wherein:

$b_{i,r-1}$ represents the device's private key of the (r-1)th time sub-segment of the ith time segment, and $b_{i,r}=b_{i,r-1}+ \delta$.

9. A key processing apparatus, comprising:

an obtaining unit (401), configured to obtain a private key update message provided by a security device, wherein the private key update message comprises an update parameter generated when the security device enters an rth time sub-segment of an ith time segment, wherein i and r represent time index values and both are integers greater than or equal to 0;
a first updating unit (402), configured to: generate, when r is 0, a user's private key of the rth time sub-segment of the ith time segment by using the update parameter generated when the security device enters the rth time sub-segment of the ith time segment, a user's private key of a last time sub-segment of an (i-1)th time segment, and time index values of the rth time sub-segment of the ith time segment and the last time sub-segment of the (i-1)th time segment; and
a second updating unit (403), configured to: generate, when r is greater than 0, the user's private key of the rth

time sub-segment of the $i^{th}$ time segment by using the update parameter generated when the security device enters the $r^{th}$ time sub-segment of the $i^{th}$ time segment, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, and

wherein the apparatus is configured to:

generate a user's private key of a $0^{th}$ time sub-segment of a $0^{th}$ time segment by using a first random parameter and a key Hash value, wherein the first random parameter is randomly selected from a preset value set, and the key Hash value is element data that belongs to a first cyclic group of bilinear mapping and is obtained by performing a Hash operation on a time index value of the $0^{th}$ time sub-segment of the $0^{th}$ time segment, wherein a user's private key comprises a first private key parameter and a second private key parameter, and the update parameter comprises a first update parameter and a second update parameter;

the first updating unit (402) is specifically configured to: obtain, when r is 0, element data by performing a Hash operation on the time index values of the $r^{th}$ time sub-segment of the $i^{th}$ time segment and the last time sub-segment of the $(i-1)^{th}$ time segment, wherein the element data belongs to the first cyclic group; generate a first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the last time sub-segment of the $(i-1)^{th}$ time segment; and, generate a second private key parameter of the $r^{th}$ time sub-segment of the $i^{th}$ time segment by using the second update parameter generated when the security device enters the $r^{th}$ time sub-segment of the $i^{th}$ time segment and the second private key parameter of the last time sub-segment of the $(i-1)^{th}$ time segment; and

the second updating unit (403) is specifically configured to: obtain, when r is greater than 0, the element data by performing a Hash operation on the time index values of the $r^{th}$ time sub-segment and the $(r-1)^{th}$ time sub-segment of the $i^{th}$ time segment, wherein the element data belongs to the first cyclic group; generate the first private key parameter of the $r^{th}$ time sub-segment of the $i^{th}$ time segment by using the element data, the first update parameter and the second update parameter that are generated when the security device enters the $r^{th}$ time sub-segment of the $i^{th}$ time segment, and a first private key parameter and a second private key parameter of the $(r-1)^{th}$ time sub-segment of the $i^{th}$ time segment; and generate the second private key parameter of the $r^{th}$ time sub-segment of the $i^{th}$ time segment by using the second private key parameter of the $(r-1)^{th}$ time sub-segment of the $i^{th}$ time segment and the second update parameter generated when the security device enters the $r^{th}$ time sub-segment of the $i^{th}$ time segment.

10. The apparatus according to claim 9, wherein the update parameter of the $r^{th}$ time sub-segment of the $i^{th}$ time segment is generated by the security device by using a device's private key of the $r^{th}$ time sub-segment of the $i^{th}$ time segment, wherein a device's private key of the $0^{th}$ time sub-segment of the $0^{th}$ time segment is a second random parameter randomly selected from the preset value set; and the device's private key of the $r^{th}$ time sub-segment of the $i^{th}$ time segment is generated by using a device's private key of the $(r-1)^{th}$ time sub-segment of the $i^{th}$ time segment or the last time sub-segment of the $(i-1)^{th}$ time segment, and a third random parameter randomly selected from the preset value set; and

therefore, the user's private key of the $0^{th}$ time sub-segment of the $0^{th}$ time segment is specifically generated by using the first random parameter, the device's private key of the $0^{th}$ time sub-segment of the $0^{th}$ time segment, and the key Hash value.

11. The apparatus according to claim 9 or 10, further comprising:

a cyclic group generating unit (404), configured to generate a $q^{th}$-order first cyclic group G1 and a $q^{th}$-order second cyclic group G2 according to a security parameter k, so that the two $q^{th}$-order cyclic groups satisfy bilinear mapping e: G1×G1→G2, wherein q is a prime number, and k is a bit length of q, wherein the preset value set is $Z^{*}_{q}$, wherein $Z^{*}_{q}$ represents a remainder set that does not comprise a value 0 and is obtained by performing a modulo operation between an integer set Z and q.

12. The apparatus according to claim 11, further comprising:

a decrypting unit (405), configured to: decrypt, when a ciphertext obtained by encrypting target data by using a public key and a target time index value is received, the ciphertext by using a user's private key corresponding to the target time index value, so as to obtain the target data.

**13.** A key processing apparatus, comprising:

an update parameter generating unit (601), configured to: generate an update parameter upon entry into an $r^{th}$ time sub-segment of an $i^{th}$ time segment, and send the update parameter to a user equipment, wherein the update parameter is used to instruct the user equipment to: when r is 0, generate a user's private key of the $r^{th}$ time sub-segment of the $i^{th}$ time segment by using the update parameter, a user's private key of a last time sub-segment of an $(i-1)^{th}$ time segment, and time index values of the $r^{th}$ time sub-segment of the $i^{th}$ time segment and the last time sub-segment of the $(i-1)^{th}$ time segment; and, when r is greater than 0, generate the user's private key of the $r^{th}$ time sub-segment of the $i^{th}$ time segment by using the update parameter, a user's private key of an $(r-1)^{th}$ time sub-segment of the $i^{th}$ time segment, and time index values of the $r^{th}$ time sub-segment and the $(r-1)^{th}$ time sub-segment of the $i^{th}$ time segment, and wherein the apparatus is configured to:

generate a user's private key of a $0^{th}$ time sub-segment of a $0^{th}$ time segment by using a first random parameter and a key Hash value, wherein the first random parameter is randomly selected from a preset value set, and the key Hash value is element data that belongs to a first cyclic group and is obtained by performing a Hash operation on a time index value of the $0^{th}$ time sub-segment of the $0^{th}$ time segment, wherein the update parameter comprises a first update parameter and a second update parameter, and a user's private key comprises a first private key parameter and a second private key parameter, and the update parameter generating unit (601) comprises:

a first generating unit (6011), configured to: generate, when r is 0, the update parameter according to a first parameter generation formula by using a device's private key of the $r^{th}$ time sub-segment of the $i^{th}$ time segment, a device's private key of the last time sub-segment of the $(i-1)^{th}$ time segment, and the time index values of the $r^{th}$ time sub-segment of the $i^{th}$ time segment and the last time sub-segment of the $(i-1)^{th}$ time segment, wherein:

the first parameter generation formula is:

$$SKR_{i,r} = b_{i,r}H_1(i,r) - b_{i-1,RN[i-1]}H_1(i-1,RN[i-1])$$

wherein:

$b_{i,r}$ represents the device's private key of the $r^{th}$ time sub-segment of the $i^{th}$ time segment, $b_{i-1,RN[i-1]}$ represents the device's private key of the last time sub-segment of the $(i-1)^{th}$ time segment, $b_{i,r}=b_{i-1,RN[i-1]}+\delta$, and $\delta$ is a third random parameter selected randomly from the preset value set; and

a second generating unit (6012), configured to: generate, when the time index value r is greater than 0, the update parameter according to a second parameter generation formula by using the device's private key of the $r^{th}$ time sub-segment of the $i^{th}$ time segment, the device's private key of the $(r-1)^{th}$ time sub-segment of the $i^{th}$ time segment, and the time index values of the $r^{th}$ time sub-segment and the $(r-1)^{th}$ time sub-segment of the $i^{th}$ time segment, wherein:

the second parameter generation formula is:

$$SKR_{i,r} = b_{i,r}H_1(i,r) - b_{i,r-1}H_1(i,r-1)$$

wherein:

$b_{i,r-1}$ represents the device's private key of the $(r-1)^{th}$ time sub-segment of the $i^{th}$ time segment, and $b_{i,r}=b_{i,r-1}+\delta$.

**Patentansprüche**

1. Schlüsselverarbeitungsverfahren, das Folgendes umfasst:

   Erhalten (101) durch ein Anwendergerät einer Aktualisierungsnachricht für einen privaten Schlüssel, die durch eine Sicherheitsvorrichtung bereitgestellt ist, wobei die Aktualisierungsnachricht für den privaten Schlüssel einen Aktualisierungsparameter umfasst, der erzeugt wird, wenn die Sicherheitsvorrichtung in ein r-tes Zeituntersegment eines i-ten Zeitsegments eintritt, wobei i und r Zeitindexwerte repräsentieren und beide Ganzzahlen größer als oder gleich 0 sind;

   Erzeugen (102), wenn r gleich 0 ist, des privaten Schlüssels eines Anwenders des r-ten Zeituntersegments des i-ten Zeitsegments durch Verwenden des Aktualisierungsparameters, der erzeugt wird, wenn die Sicherheitsvorrichtung in das r-te Zeituntersegment des i-ten Zeitsegments eintritt, des privaten Schlüssels eines Anwenders eines letzten Zeituntersegments eines (i-1)-ten Zeitsegments und von Zeitindexwerten des r-ten Zeituntersegments des i-ten Zeitsegments und des letzten Zeituntersegments des (i-1)-ten Zeitsegments; und Erzeugen (103), wenn r größer als 0 ist, des privaten Schlüssels des Anwenders des r-ten Zeituntersegments des i-ten Zeitsegments durch Verwenden des Aktualisierungsparameters, der erzeugt wird, wenn die Sicherheitsvorrichtung in das r-te Zeituntersegment des i-ten Zeitsegments eintritt, des privaten Schlüssels eines Anwenders eines (r-1)-ten Zeituntersegments des i-ten Zeitsegments und von Zeitindexwerten des r-ten Zeituntersegments und des (r-1)-ten Zeituntersegments des i-ten Zeitsegments, wobei: der private Schlüssel eines Anwenders eines 0-ten Zeituntersegments eines 0-ten Zeitsegments durch Verwenden eines ersten Zufallsparameters und eines Schlüssel-Hash-Werts erzeugt wird, wobei der erste Zufallsparameter zufällig aus einer voreingestellten Wertemenge ausgewählt wird und der Schlüssel-Hash-Wert Elementdaten ist, die zu einer ersten zyklischen Gruppe bilinearer Abbildungen gehören und durch Ausführung einer Hash-Operation auf einem Zeitindexwert des 0-ten Zeituntersegments des 0-ten Zeitsegments erhalten wird,

   wobei der private Schlüssel eines Anwenders einen ersten privaten Schlüsselparameter und einen zweiten privaten Schlüsselparameter umfasst und der Aktualisierungsparameter einen ersten Aktualisierungsparameter und einen zweiten Aktualisierungsparameter umfasst;

   wobei das Erzeugen (102), wenn r gleich 0 ist, Folgendes umfasst:

   Erhalten, wenn r gleich 0 ist, von Elementdaten durch Ausführen einer Hash-Operation auf den Zeitindexwerten des r-ten Zeituntersegments des i-ten Zeitsegments und des letzten Zeituntersegments des (i-1)-ten Zeitsegments, wobei die Elementdaten zu der ersten zyklischen Gruppe gehören; Erzeugen eines ersten privaten Schlüsselparameters des r-ten Zeituntersegments des i-ten Zeitsegments durch Verwenden der Elementdaten, des ersten Aktualisierungsparameters und des zweiten Aktualisierungsparameters, die erzeugt werden, wenn die Sicherheitsvorrichtung in das r-te Zeituntersegment des i-ten Zeitsegments eintritt, und eines ersten privaten Schlüsselparameters und eines zweiten privaten Schlüsselparameters des letzten Zeituntersegments des (i-1)-ten Zeitsegments; und Erzeugen eines zweiten privaten Schlüsselparameters des r-ten Zeituntersegments des i-ten Zeitsegments durch Verwenden des zweiten Aktualisierungsparameters, der erzeugt wird, wenn die Sicherheitsvorrichtung in das r-te Zeituntersegment des i-ten Zeitsegments eintritt, und des zweiten privaten Schlüsselparameters des letzten Zeituntersegments des (i-1)-ten Zeitsegments; und

   das Erzeugen (103), wenn r größer als 0 ist, Folgendes umfasst:

   Erhalten, wenn r größer als 0 ist, der Elementdaten durch Ausführen einer Hash-Operation auf den Zeitindexwerten des r-ten Zeituntersegments und des (r-1)-ten Zeituntersegments des i-ten Zeitsegments, wobei die Elementdaten zu der ersten zyklischen Gruppe gehören; Erzeugen des ersten privaten Schlüsselparameters des r-ten Zeituntersegments des i-ten Zeitsegments durch Verwenden der Elementdaten, des ersten Aktualisierungsparameters und des zweiten Aktualisierungsparameters, die erzeugt werden, wenn die Sicherheitsvorrichtung in das r-te Zeituntersegment des i-ten Zeitsegments eintritt, und eines ersten privaten Schlüsselparameters und eines zweiten privaten Schlüsselparameters des (r-1)-ten Zeituntersegments des i-ten Zeitsegments; und

   Erzeugen des zweiten privaten Schlüsselparameters des r-ten Zeituntersegments des i-ten Zeitsegments durch Verwenden des zweiten privaten Schlüsselparameters des (r-1)-ten Zeituntersegments des i-ten Zeitsegments und des zweiten Aktualisierungsparameters, der erzeugt wird, wenn die Sicherheitsvorrichtung in das r-te Zeituntersegment des i-ten Zeitsegments eintritt.

2. Verfahren nach Anspruch 1, wobei der Aktualisierungsparameter des r-ten Zeituntersegments des i-ten Zeitsegments durch die Sicherheitsvorrichtung durch Verwenden des privaten Schlüssels einer Vorrichtung des r-ten Zeituntersegments des i-ten Zeitsegments erzeugt wird, wobei der private Schlüssel einer Vorrichtung des 0-ten Zeituntersegments des 0-ten Zeitsegments ein zweiter Zufallsparameter ist, der zufällig aus der voreingestellten Wertemenge ausgewählt ist;

der private Schlüssel der Vorrichtung des r-ten Zeituntersegments des i-ten Zeitsegments durch Verwenden des privaten Schlüssels einer Vorrichtung des (r-1)-ten Zeituntersegments des i-ten Zeitsegments oder des letzten Zeituntersegments des (i-1)-ten Zeitsegments und eines dritten Zufallsparameters, der zufällig aus der voreingestellten Wertemenge ausgewählt ist, erzeugt wird; und

deshalb der private Schlüssel des Anwenders des 0-ten Zeituntersegments des 0-ten Zeitsegments insbesondere durch Verwenden des ersten Zufallsparameters, des privaten Schlüssels der Vorrichtung des 0-ten Zeituntersegments des 0-ten Zeitsegments und des Schlüssel-Hash-Werts erzeugt wird.

3. Verfahren nach Anspruch 1 oder 2, wobei das Erhalten, wenn r gleich 0 ist, von Elementdaten durch Ausführen einer Hash-Operation auf den Zeitindexwerten des r-ten Zeituntersegments des i-ten Zeitsegments und des letzten Zeituntersegments des (i-1)-ten Zeitsegments, wobei die Elementdaten zu der ersten zyklischen Gruppe gehören;

Erzeugen eines ersten privaten Schlüsselparameters des r-ten Zeituntersegments des i-ten Zeitsegments durch Verwenden der Elementdaten, des ersten Aktualisierungsparameters und des zweiten Aktualisierungsparameters, die erzeugt werden, wenn die Sicherheitsvorrichtung in das r-te Zeituntersegment des i-ten Zeitsegments eintritt, und eines ersten privaten Schlüsselparameters und eines zweiten privaten Schlüsselparameters des letzten Zeituntersegments des (i-1)-ten Zeitsegments; und

Erzeugen eines zweiten privaten Schlüsselparameters des r-ten Zeituntersegments des i-ten Zeitsegments durch Verwenden des zweiten privaten Schlüsselparameters des letzten Zeituntersegments des (i-1)-ten Zeitsegments und des zweiten Aktualisierungsparameters, der erzeugt wird, wenn die Sicherheitsvorrichtung in das r-te Zeituntersegment des i-ten Zeitsegments eintritt, Folgendes umfasst:

Erzeugen, wenn r gleich 0 ist, des privaten Schlüssels des Anwenders des r-ten Zeituntersegments des i-ten Zeitsegments gemäß einer Aktualisierungsformel für den privaten Schlüssel durch Verwenden des ersten Aktualisierungsparameters und des zweiten Aktualisierungsparameters, die erzeugt werden, wenn die Sicherheitsvorrichtung in das r-te Zeituntersegment des i-ten Zeitsegments eintritt, des ersten privaten Schlüsselparameters und des zweiten privaten Schlüsselparameters des letzten Zeituntersegments des (i-1)-ten Zeitsegments und der Zeitindexwerte des r-ten Zeituntersegments des i-ten Zeitsegments und des letzten Zeituntersegments des (i-1)-ten Zeitsegments, wobei:

die Aktualisierungsformel für den privaten Schlüssel Folgendes umfasst:

$$S_{i,r} = S_{i-1,RN[i-1]} + SKR_{i,r} - \sigma H_1(i,r) + u_{i-1,RN[i-1]}(H_1(i,r) - H_1(i-1,RN[i-1]));$$

und

$$u_{i,r} = u_{i-1,RN[i-1]} - \sigma,$$

wobei:

wobei $S_{i,r}$ den ersten privaten Schlüsselparameter des r-ten Zeituntersegments des i-ten Zeitsegments repräsentiert, und $u_{i,r}$ den zweiten privaten Schlüsselparameter des r-ten Zeituntersegments des i-ten Zeitsegments repräsentiert;

$SKR_{i,r}$ den ersten Aktualisierungsparameter des r-ten Zeituntersegments des i-ten Zeitsegments repräsentiert, und $\sigma$ den zweiten Aktualisierungsparameter des r-ten Zeituntersegments des i-ten Zeitsegments repräsentiert;

$RN[i-1]$ den Zeitindexwert des letzten Zeituntersegments des (i-1)-ten Zeitsegments repräsentiert;

$H_1(i,r)$ die Elementdaten repräsentiert, die zu der ersten zyklischen Gruppe gehören und durch Ausführen einer Hash-Operation auf den Zeitindexwerten i und r erhalten werden, und

$H_1(i-1,RN[i-1])$ die Elementdaten repräsentiert, die zu der ersten zyklischen Gruppe gehören und durch Ausführen einer Hash-Operation auf den Zeitindexwerten i-1 und $RN[i-1]$ erhalten werden,

das Erhalten, wenn r größer als 0 ist, der Elementdaten durch Ausführen einer Hash-Operation auf den Zeitindexwerten des r-ten Zeituntersegments und des (r-1)-ten Zeituntersegments des i-ten Zeitsegments, wobei die Elementdaten zu der ersten zyklischen Gruppe gehören; Erzeugen des ersten privaten Schlüsselparameters des r-ten Zeituntersegments des i-ten Zeitsegments durch Verwenden der Elementdaten, des ersten Aktualisierungsparameters und des zweiten Aktualisierungsparameters, die erzeugt werden, wenn die Sicherheitsvorrichtung in das r-te Zeituntersegment des i-ten Zeitsegments eintritt, und eines ersten privaten Schlüsselparameters und eines zweiten privaten Schlüsselparameters des (r-1)-ten Zeituntersegments des i-ten Zeitsegments; und

Erzeugen des zweiten privaten Schlüsselparameters des r-ten Zeituntersegments des i-ten Zeitsegments durch Verwenden des zweiten privaten Schlüsselparameters des (r-1)-ten Zeituntersegments des i-ten Zeitsegments und des zweiten Aktualisierungsparameters, Folgendes umfasst:

Erzeugen, wenn r größer als 0 ist, des privaten Schlüssels des Anwenders des r-ten Zeituntersegments des i-ten Zeitsegments gemäß einer Auffrischungsformel für den privaten Schlüssel durch Verwenden des ersten Aktualisierungsparameters und des zweiten Aktualisierungsparameters, die erzeugt werden, wenn die Sicherheitsvorrichtung in das r-te Zeituntersegment des i-ten Zeitsegments eintritt, des ersten privaten Schlüsselparameters und des zweiten privaten Schlüsselparameters des (r-1)-ten Zeituntersegments des i-ten Zeitsegments und der Zeitindexwerte des r-ten Zeituntersegments und des (r-1)-ten Zeituntersegments des i-ten Zeitsegments, wobei:

die Auffrischungsformel für den privaten Schlüssel Folgendes umfasst:

$$S_{i,r} = S_{i,r-1} + SKR_{i,r} - \sigma H_1(i,r) + u_{i,r-1}(H_1(i,r) - H_1(i,r-1));$$

und

$$u_{i,r} = u_{i,r-1} - \sigma,$$

wobei:

$H_1(i,r-1)$ die Elementdaten repräsentiert, die zu der ersten zyklischen Gruppe gehören und durch Ausführen einer Hash-Operation auf den Zeitindexwerten i und r-1 erhalten werden; und der private Schlüssel des Anwenders des 0-ten Zeituntersegments des 0-ten Zeitsegments insbesondere gemäß einer Schlüsselerzeugungsformel durch Verwenden des ersten Zufallsparameters, des privaten Schlüssels der Vorrichtung des 0-ten Zeituntersegments des 0-ten Zeitsegments und des Schlüssel-Hash-Werts erzeugt wird, wobei:

die Schlüsselerzeugungsformel Folgende ist:

$$S_{0,0} = u_{0,0}H_1(0,0) - b_{0,0}H_1(0,0),$$

wobei:

$S_{0,0}$ einen ersten privaten Schlüsselparameter des 0-ten Zeituntersegments des 0-ten Zeitsegments repräsentiert, $u_{0,0}$ der erste Zufallsparameter ist, wobei der erste Zufallsparameter ein zweiter privater Schlüsselparameter des 0-ten Zeituntersegments des 0-ten Zeitsegments ist, $H_1(0,0)$ ein Hash-Wert des 0-ten Zeituntersegments des 0-ten Zeitsegments ist und $b_{0,0}$ der private Schlüssel der Vorrichtung des 0-ten Zeituntersegments des 0-ten Zeitsegments ist.

4. Verfahren nach Anspruch 1, 2 oder 3, wobei der zweite Aktualisierungsparameter der dritte Zufallsparameter ist; wenn r gleich 0 ist, der erste Aktualisierungsparameter insbesondere durch die Sicherheitsvorrichtung gemäß einer ersten Parametererzeugungsformel durch Verwenden des privaten Schlüssels der Vorrichtung des r-ten Zeituntersegments des i-ten Zeitsegments, des privaten Schlüssels der Vorrichtung des letzten Zeituntersegments des (i-1)ten Zeitsegments und der Elementdaten, die zu der ersten zyklischen Gruppe gehören und durch Ausführen einer Hash-Operation auf den Zeitindexwerten des r-ten Zeituntersegments des i-ten Zeitsegments und des letzten Zeituntersegments des (i-1)-ten Zeitsegments erhalten werden, erzeugt wird, wobei:

die erste Parametererzeugungsformel Folgende ist:

$$SKR_{i,r} = b_{i,r}H_1(i,r) - b_{i-1,RN[i-1]}H_1(i-1,RN[i-1]),$$

wobei:

$b_{i,r}$ den privaten Schlüssel der Vorrichtung des r-ten Zeituntersegments des i-ten Zeitsegments repräsentiert, $b_{i-1,RN[i-1]}$ den privaten Schlüssel der Vorrichtung des letzten Zeituntersegments des (i-1)-ten Zeitsegments repräsentiert, $b_{i,r} = b_{i-1,RN[i-1]} + \delta$, und $\delta$ der dritte Zufallsparameter ist; und wenn r größer als 0 ist, der erste Aktualisierungsparameter insbesondere durch die Sicherheitsvorrichtung gemäß einer zweiten Parametererzeugungsformel durch Verwenden des privaten Schlüssels der Vorrichtung des r-ten Zeituntersegments des i-ten Zeitsegments, des privaten Schlüssels der Vorrichtung des (r-1)-ten Zeituntersegments des i-ten-Zeitsegments und der Elementdaten, die zu der ersten zyklischen Gruppe gehören und durch Ausführen einer Hash-Operation auf den Zeitindexwerten des r-ten Zeituntersegments und des (r-1)-ten Zeituntersegments des i-ten Zeitsegments erhalten werden, erzeugt wird, wobei:

die zweite Parametererzeugungsformel Folgende ist:

$$SKR_{i,r} = b_{i,r}H_1(i,r) - b_{i,r-1}H_1(i,r-1);$$

wobei:

$b_{i,r-1}$ den privaten Schlüssel der Vorrichtung des (r-1)-ten Zeituntersegments des i-ten Zeitsegments repräsentiert und $b_{i,r} = b_{i,r-1} + \delta$ ist.

5. Verfahren nach einem der Ansprüche 1 bis 4, wobei das Verfahren vor dem Erhalten einer Aktualisierungsnachricht für den privaten Schlüssel, die durch eine Sicherheitsvorrichtung bereitgestellt ist, ferner Folgendes umfasst: Erhalten einer ersten zyklischen Gruppe G1 q-ter Ordnung und einer zweiten zyklischen Gruppe G2 q-ter Ordnung, die gemäß einem Sicherheitsparameter k erzeugt werden, wobei die zwei zyklischen Gruppen q-ter Ordnung die bilineare Abbildung e: G1×G2→G2 erfüllen, wobei q eine Primzahl ist und k eine Bitlänge von q ist, wobei:

die voreingestellte Wertemenge $Z^*_q$ ist, wobei $Z^*_q$ eine Restmenge repräsentiert, die einen Wert 0 nicht umfasst und durch Ausführen einer Modulo-Operation zwischen einer Ganzzahlmenge Z und q erhalten wird.

6. Verfahren nach einem der Ansprüche 1 bis 5, wobei das Verfahren ferner Folgendes umfasst:

Entschlüsseln, wenn ein verschlüsselter Text, der durch Verschlüsseln von Zieldaten durch Verwenden des öffentlichen Schlüssels eines Anwenders erhalten wird, und ein Zielzeitindexwert empfangen werden, des verschlüsselten Texts durch Verwenden des privaten Schlüssels eines Anwenders, der dem Zielzeitindexwert entspricht, um die Zieldaten zu erhalten.

7. Verfahren nach Anspruch 6, wobei der öffentliche Schlüssel des Anwenders gemäß einer Erzeugungsformel für den öffentlichen Schlüssel durch Verwenden eines Erzeugers der ersten zyklischen Gruppe und des privaten Schlüssels der Vorrichtung und des ersten privaten Schlüsselparameters des 0-ten Zeituntersegments des 0-ten Zeitsegments erzeugt wird, wobei die Erzeugungsformel für den öffentlichen Schlüssel Folgende ist:

$$PK_B = b_{0,0}P, \; P_{pub} = u_{0,0}P,$$

wobei:

$PK_B$ ein erster öffentlicher Schlüsselparameter ist, $P_{pub}$ ein zweiter öffentlicher Schlüsselparameter ist, und P der Erzeuger der ersten zyklischen Gruppe ist;
deshalb wird der verschlüsselte Text insbesondere gemäß einer Verschlüsselungsformel erhalten, wobei die Verschlüsselungsformel Folgende ist:

$$V = M \oplus H_2(e(P_{pub} + PK_B, H_1(i,r))^x);$$

und

$$U = xP,$$

wobei:

x ein vierter Zufallsparameter ist, der zufällig aus der voreingestellten Wertemenge ausgewählt ist, M die Zieldaten sind, der verschlüsselte Text U, V, i und r umfasst; und $H_2(e(P_{pub} + PK_B, H_1(i,r))^x)$ Elementdaten repräsentiert, die zu der zweiten zyklischen Gruppe gehören und durch Ausführen einer Hash-Operation auf $e(P_{pub} + PK_B, H_1(i,r))^x$ erhalten werden;
deshalb ist das Entschlüsseln des verschlüsselten Texts durch Verwenden des privaten Schlüssels eines Anwenders, der dem Zeitindexwert entspricht, um die Zieldaten zu erhalten, insbesondere Folgendes: Erhalten der Zieldaten gemäß einer Entschlüsselungsformel durch Verwenden des privaten Schlüssels des Anwenders, der dem Zeitindexwert entspricht, wobei die Entschlüsselungsformel Folgende ist:

$$M = V \oplus H_2(e(U,S_{ir})),$$

wobei:

$H_2(e(U,S_{i,r}))$ die Elementdaten repräsentiert, die zu der zweiten zyklischen Gruppe gehören und durch Ausführen einer Hash-Operation auf $e(U,S_{i,r})$ erhalten werden.

8. Schlüsselverarbeitungsverfahren, das Folgendes umfasst:

Erzeugen eines Aktualisierungsparameters, wenn eine Sicherheitsvorrichtung in ein r-tes Zeituntersegment eines i-ten Zeitsegments eintritt, und Senden einer Aktualisierungsnachricht, die den Aktualisierungsparameter trägt, zu einem Anwendergerät, wobei die Aktualisierungsnachricht verwendet wird, das Anwendergerät anzuweisen: wenn r gleich 0 ist, den privaten Schlüssel eines Anwenders des r-ten Zeituntersegments des i-ten Zeitsegments durch Verwenden des Aktualisierungsparameters, des privaten Schlüssels eines Anwenders eines letzten Zeituntersegments eines (i-1)-ten Zeitsegments und von Zeitindexwerten des r-ten Zeituntersegments des i-ten Zeitsegments und des letzten Zeituntersegments des (i-1)-ten Zeitsegments zu erzeugen; und wenn r größer als 0 ist, den privaten Schlüssel des Anwenders des r-ten Zeituntersegments des i-ten Zeitsegments durch Verwenden des Aktualisierungsparameters, des privaten Schlüssels eines Anwenders eines (r-1)-ten Zeituntersegments des i-ten Zeitsegments und von Zeitindexwerten des r-ten Zeituntersegments und des (r-1)-ten Zeituntersegments des i-ten Zeitsegments zu erzeugen, wobei:

der private Schlüssel eines Anwenders eines 0-ten Zeituntersegments eines 0-ten Zeitsegments durch Verwenden eines ersten Zufallsparameters und eines Schlüssel-Hash-Werts erzeugt wird, wobei der erste Zufallsparameter zufällig aus einer voreingestellten Wertemenge ausgewählt wird und der Schlüssel-Hash-Wert Elementdaten ist, die zu einer ersten zyklischen Gruppe gehören und durch Ausführen einer Hash-Operation auf einem Zeitindexwert des 0-ten Zeituntersegments des 0-ten Zeitsegments erhalten werden, wobei der Aktualisierungsparameter einen ersten Aktualisierungsparameter und einen zweiten Aktualisierungsparameter umfasst und der private Schlüssel eines Anwenders einen ersten privaten Schlüsselparameter und einen zweiten privaten Schlüsselparameter umfasst, und deshalb das Erzeugen eines Aktualisierungsparameters, wenn eine Sicherheitsvorrichtung in ein r-tes Zeituntersegment eines i-ten Zeitsegments eintritt, Folgendes umfasst:

Erzeugen, wenn r gleich 0 ist, des Aktualisierungsparameters gemäß einer ersten Parametererzeugungsformel durch Verwenden des privaten Schlüssels einer Vorrichtung des r-ten Zeituntersegments des i-ten Zeitsegments, des privaten Schlüssels einer Vorrichtung des letzten Zeituntersegments des (i-1)-ten Zeitsegments und der Zeitindexwerte des r-ten Zeituntersegments des i-ten Zeitsegments und des letzten Zeituntersegments des (i-1)-ten Zeitsegments, wobei:

die erste Parametererzeugungsformel Folgende ist:

$$SKR_{i,r} = b_{i,r}H_1(i,r) - b_{i-1,RN[i-1]}H_1(i-1,RN[i-1]),$$

$b_{i,r}$ den privaten Schlüssel der Vorrichtung des r-ten Zeituntersegments des i-ten Zeitsegments repräsentiert, $b_{i-1,RN[i-1]}$ den privaten Schlüssel der Vorrichtung des letzten Zeituntersegments des (i-1)-ten Zeitsegments repräsentiert, $b_{i,r} = b_{i-1,RN[i-1]} + \delta$, und $\delta$ ein dritter Zufallsparameter ist, der zufällig aus der voreingestellten Wertemenge ausgewählt ist; und
Erzeugen, wenn r größer als 0 ist, des Aktualisierungsparameters gemäß einer zweiten Parametererzeugungsformel durch Verwenden des privaten Schlüssels der Vorrichtung des r-ten Zeituntersegments des i-ten Zeitsegments, des privaten Schlüssels der Vorrichtung des (r-1)-ten Zeituntersegments des i-ten-Zeitsegments und der Zeitindexwerte des r-ten Zeituntersegments und des (r-1)-ten Zeituntersegments des i-ten Zeitsegments, wobei:

die zweite Parametererzeugungsformel Folgende ist:

$$SKR_{i,r} = b_{i,r}H_1(i,r) - b_{i,r-1}H_1(i,r-1),$$

wobei:

$b_{i,r-1}$ den privaten Schlüssel der Vorrichtung des (r-1)-ten Zeituntersegments des i-ten Zeitsegments repräsentiert und $b_{i,r} = b_{i,r-1} + \delta$ ist.

**9.** Schlüsselverarbeitungseinuchtung, die Folgendes umfasst:

eine Erhalteeinheit (401), die konfiguriert ist, eine Aktualisierungsnachricht für einen privaten Schlüssel, die durch eine Sicherheitsvorrichtung bereitgestellt ist, zu erhalten, wobei die Aktualisierungsnachricht für den privaten Schlüssel einen Aktualisierungsparameter umfasst, der erzeugt wird, wenn die Sicherheitsvorrichtung in ein r-tes Zeituntersegment eines i-ten Zeitsegments eintritt, wobei i und r Zeitindexwerte repräsentieren und beide Ganzzahlen größer als oder gleich 0 sind;
eine erste Aktualisierungseinheit (402), die konfiguriert ist: wenn r gleich 0 ist, den privaten Schlüssel eines Anwenders des r-ten Zeituntersegments des i-ten Zeitsegments durch Verwenden des Aktualisierungsparameters, der erzeugt wird, wenn die Sicherheitsvorrichtung in das r-te Zeituntersegment des i-ten Zeitsegments eintritt, den privaten Schlüssel eines Anwenders eines letzten Zeituntersegments eines (i-1)-ten Zeitsegments und Zeitindexwerte des r-ten Zeituntersegments des i-ten Zeitsegments und des letzten Zeituntersegments des (i-1)-ten Zeitsegments zu erzeugen; und
eine zweite Aktualisierungseinheit (403), die konfiguriert ist: wenn r größer als 0 ist, den privaten Schlüssel des Anwenders des r-ten Zeituntersegments des i-ten Zeitsegments durch Verwenden des Aktualisierungsparameters, der erzeugt wird, wenn die Sicherheitsvorrichtung in das r-te Zeituntersegment des i-ten Zeitsegments eintritt, den privaten Schlüssel eines Anwenders eines (r-1)-ten Zeituntersegments des i-ten Zeitsegments und Zeitindexwerte des r-ten Zeituntersegments und des (r-1)-ten Zeituntersegments des i-ten Zeitsegments zu erzeugen, und
wobei die Einrichtung konfiguriert ist:

den privaten Schlüssel eines Anwenders eines 0-ten Zeituntersegments eines 0-ten Zeitsegments durch Verwenden eines ersten Zufallsparameters und eines Schlüssel-Hash-Werts zu erzeugen, wobei der erste Zufallsparameter zufällig aus einer voreingestellten Wertemenge ausgewählt ist und der Schlüssel-Hash-Wert Elementdaten ist, die zu einer ersten zyklischen Gruppe mit bilinearer Abbildung gehören und durch Ausführen einer Hash-Operation auf einem Zeitindexwert des 0-ten Zeituntersegments des 0-ten Zeitsegments erhalten werden, wobei der private Schlüssel eines Anwenders einen ersten privaten Schlüsselparameter und einen zweiten privaten Schlüsselparameter umfasst und der Aktualisierungsparameter einen ersten Aktualisierungsparameter und einen zweiten Aktualisierungsparameter umfasst;

die erste Aktualisierungseinheit (402) insbesondere konfiguriert ist: wenn r gleich 0 ist, Elementdaten durch Ausführen einer Hash-Operation auf den Zeitindexwerten des r-ten Zeituntersegments des i-ten Zeitsegments und des letzten Zeituntersegments des (i-1)-ten Zeitsegments zu erhalten, wobei die Elementdaten zu der ersten zyklischen Gruppe gehören; einen ersten privaten Schlüsselparameter des r-ten Zeituntersegments des i-ten Zeitsegments durch Verwenden der Elementdaten, des ersten Aktualisierungsparameters und des zweiten Aktualisierungsparameters, die erzeugt werden, wenn die Sicherheitsvorrichtung in das r-te Zeituntersegment des i-ten Zeitsegments eintritt, und eines ersten privaten Schlüsselparameters und eines zweiten privaten Schlüsselparameters des letzten Zeituntersegments des (i-1)-ten Zeitsegments zu erzeugen; und einen zweiten privaten Schlüsselparameter des r-ten Zeituntersegments des i-ten Zeitsegments durch Verwenden des zweiten Aktualisierungsparameters, der erzeugt wird, wenn die Sicherheitsvorrichtung in das r-te Zeituntersegment des i-ten Zeitsegments eintritt, und des zweiten privaten Schlüsselparameters des letzten Zeituntersegments des (i-1)-ten Zeitsegments zu erzeugen; und

die zweite Aktualisierungseinheit (403) insbesondere konfiguriert ist: wenn r größer als 0 ist, die Elementdaten durch Ausführen einer Hash-Operation auf den Zeitindexwerten des r-ten Zeituntersegments und des (r-1)-ten Zeituntersegments des i-ten Zeitsegments zu erhalten, wobei die Elementdaten zu der ersten zyklischen Gruppe gehören; den ersten privaten Schlüsselparameter des r-ten Zeituntersegments des i-ten Zeitsegments durch Verwenden der Elementdaten, des ersten Aktualisierungsparameters und des zweiten Aktualisierungsparameters, die erzeugt werden, wenn die Sicherheitsvorrichtung in das r-te Zeituntersegment des i-ten Zeitsegments eintritt, und eines ersten privaten Schlüsselparameters und eines zweiten privaten Schlüsselparameters des (r-1)-ten Zeituntersegments des i-ten Zeitsegments zu erzeugen; und den zweiten privaten Schlüsselparameter des r-ten Zeituntersegments des i-ten Zeitsegments durch Verwenden des zweiten privaten Schlüsselparameters des (r-1)-ten Zeituntersegments des i-ten Zeitsegments und des zweiten Aktualisierungsparameters, der erzeugt wird, wenn die Sicherheitsvorrichtung in das r-te Zeituntersegment des i-ten Zeitsegments eintritt, zu erzeugen.

10. Einrichtung nach Anspruch 9, wobei der Aktualisierungsparameter des r-ten Zeituntersegments des i-ten Zeitsegments durch die Sicherheitsvorrichtung durch Verwenden des privaten Schlüssels einer Vorrichtung des r-ten Zeituntersegments des i-ten Zeitsegments erzeugt wird, wobei der private Schlüssel einer Vorrichtung des 0-ten Zeituntersegments des 0-ten Zeitsegments ein zweiter Zufallsparameter ist, der zufällig aus der voreingestellten Wertemenge ausgewählt ist; und der private Schlüssel der Vorrichtung des r-ten Zeituntersegments des i-ten Zeitsegments durch Verwenden des privaten Schlüssels einer Vorrichtung des (r-1)-ten Zeituntersegments des i-ten Zeitsegments oder des letzten Zeituntersegments des (i-1)-ten Zeitsegments und eines dritten Zufallsparameters, der zufällig aus der voreingestellten Wertemenge ausgewählt ist, erzeugt wird; und

deshalb der private Schlüssel des Anwenders des 0-ten Zeituntersegments des 0-ten Zeitsegments insbesondere durch Verwenden des ersten Zufallsparameters, des privaten Schlüssels der Vorrichtung des 0-ten Zeituntersegments des 0-ten Zeitsegments und des Schlüssel-Hash-Werts erzeugt wird.

11. Einrichtung nach Anspruch 9 oder 10, die ferner Folgendes umfasst:

eine Erzeugungseinheit (404) für eine zyklische Gruppe, die konfiguriert ist, eine erste zyklische Gruppe G1 q-ter Ordnung und eine zweite zyklische Gruppe G2 q-ter Ordnung gemäß einem Sicherheitsparameter k zu erzeugen, so dass die zwei zyklischen Gruppen q-ter Ordnung die bilineare Abbildung e: G1 $\times$ G2 → G2 erfüllen, wobei q eine Primzahl ist und k eine Bitlänge von q ist, wobei:

die voreingestellte Wertemenge $Z^*_q$ ist, wobei $Z^*_q$ eine Restmenge repräsentiert, die einen Wert 0 nicht umfasst und durch Ausführen einer Modulo-Operation zwischen einer Ganzzahlmenge Z und q erhalten wird.

12. Einrichtung nach Anspruch 11, die ferner Folgendes umfasst:

eine Entschlüsselungseinheit (405), die konfiguriert ist: wenn ein verschlüsselter Text, der durch Verschlüsseln von Zieldaten durch Verwenden eines öffentlichen Schlüssels erhalten wird, und ein Zielzeitindexwert empfangen werden, den verschlüsselten Text durch Verwenden des privaten Schlüssels eines Anwenders, der dem Zielzeitindexwert entspricht, zu entschlüsseln, um die Zieldaten zu erhalten.

13. Schlüsselverarbeitungseinrichtung, die Folgendes umfasst:

eine Aktualisierungsparametererzeugungseinheit (601), die konfiguriert ist: einen Aktualisierungsparameter nach dem Eintreten in ein r-tes Zeituntersegment eines i-ten Zeitsegments zu erzeugen und den Aktualisierungsparameter zu einem Anwendergerät zu senden, wobei der Aktualisierungsparameter verwendet wird, um das Anwendergerät anzuweisen: wenn r gleich 0 ist, den privaten Schlüssel eines Anwenders des r-ten Zeituntersegments des i-ten Zeitsegments durch Verwenden des Aktualisierungsparameters, des privaten Schlüssels eines Anwenders eines letzten Zeituntersegments eines (i-1)-ten Zeitsegments und von Zeitindexwerten des r-ten Zeituntersegments des i-ten Zeitsegments und des letzten Zeituntersegments des (i-1)-ten Zeitsegments zu erzeugen; und wenn r größer als 0 ist, den privaten Schlüssel des Anwenders des r-ten Zeituntersegments des i-ten Zeitsegments durch Verwenden des Aktualisierungsparameters, des privaten Schlüssels eines Anwenders eines (r-1)-ten Zeituntersegments des i-ten Zeitsegments und von Zeitindexwerten des r-ten Zeituntersegments und des (r-1)-ten Zeituntersegments des i-ten Zeitsegments zu erzeugen, und wobei die Einrichtung konfiguriert ist:

den privaten Schlüssel eines Anwenders eines 0-ten Zeituntersegments eines 0-ten Zeitsegments durch Verwenden eines ersten Zufallsparameters und eines Schlüssel-Hash-Werts zu erzeugen, wobei der erste Zufallsparameter zufällig aus einer voreingestellten Wertemenge ausgewählt ist und der Schlüssel-Hash-Wert Elementdaten ist, die zu einer ersten zyklischen Gruppe gehören und durch Ausführen einer Hash-Operation auf einem Zeitindexwert des 0-ten Zeituntersegments des 0-ten Zeitsegments erhalten werden, wobei der Aktualisierungsparameter einen ersten Aktualisierungsparameter und einen zweiten Aktualisierungsparameter umfasst, und der private Schlüssel eines Anwenders einen ersten privaten Schlüsselparameter und einen zweiten privaten Schlüsselparameter umfasst, und die Aktualisierungsparametererzeugungseinheit (601) Folgendes umfasst:

eine erste Erzeugungseinheit (6011), die konfiguriert ist: wenn r gleich 0 ist, den Aktualisierungsparameter gemäß einer ersten Parametererzeugungsformel durch Verwenden des privaten Schlüssels einer Vorrichtung des r-ten Zeituntersegments des i-ten Zeitsegments, des privaten Schlüssels einer Vorrichtung des letzten Zeituntersegments des (i-1)-ten Zeitsegments und der Zeitindexwerte des r-ten Zeituntersegments des i-ten Zeitsegments und des letzten Zeituntersegments des (i-1)-ten Zeitsegments zu erzeugen, wobei:

die erste Parametererzeugungsformel Folgende ist:

$$SKR_{i,r} = b_{i,r}H_1(i,r) - b_{i-1,RN[i-1]}H_1(i-1,RN[i-1]),$$

wobei:

$b_{i,r}$ den privaten Schlüssel der Vorrichtung des r-ten Zeituntersegments des i-ten Zeitsegments repräsentiert, $b_{i-1,RN[i-1]}$ den privaten Schlüssel der Vorrichtung des letzten Zeituntersegments des (i-1)-ten Zeitsegments repräsentiert, $b_{i,r} = b_{i-1,RN[i-1]} + \delta$, und $\delta$ ein dritter Zufallsparameter ist, der zufällig aus der voreingestellten Wertemenge ausgewählt ist; und eine zweite Erzeugungseinheit (6012), die konfiguriert ist: wenn der Zeitindexwert r größer als 0 ist, den Aktualisierungsparameter gemäß einer zweiten Parametererzeugungsformel durch Verwenden des privaten Schlüssels der Vorrichtung des r-ten Zeituntersegments des i-ten Zeitsegments, des privaten Schlüssels der Vorrichtung des (r-1)-ten Zeituntersegments des i-ten-Zeitsegments und der Zeitindexwerte des r-ten Zeituntersegments und des (r-1)-ten Zeituntersegments des i-ten Zeitsegments zu erzeugen, wobei:

die zweite Parametererzeugungsformel Folgende ist:

$$SKR_{i,r} = b_{i,r}H_1(i,r) - b_{i,r-1}H_1(i,r-1),$$

wobei:

$b_{i,r-1}$ den privaten Schlüssel der Vorrichtung des (r-1)-ten Zeituntersegments des i-ten Zeitsegments repräsentiert und $b_{i,r} = b_{i,r-1} + \delta$ ist.

**Revendications**

1. Procédé de traitement de clé, comprenant les étapes suivantes :

   obtenir (101), par un équipement utilisateur, un message de mise à jour de clé privée fourni par un dispositif de sécurité, le message de mise à jour de clé privée comportant un paramètre de mise à jour généré lorsque le dispositif de sécurité entre dans un $r^{\text{ième}}$ sous-segment de temps d'un $i^{\text{ième}}$ segment de temps, i et r représentant des valeurs d'index de temps et étant tous deux des nombres entiers supérieurs ou égaux à 0 ;
   générer (102), lorsque r est 0, une clé privée d'utilisateur du $r^{\text{ième}}$ sous-segment de temps du $i^{\text{ième}}$ segment de temps en utilisant le paramètre de mise à jour généré lorsque le dispositif de sécurité entre dans le $r^{\text{ième}}$ sous-segment de temps du $i^{\text{ième}}$ segment de temps, une clé privée d'utilisateur d'un dernier sous-segment de temps d'un $(i-1)^{\text{ième}}$ segment de temps, et des valeurs d'index de temps du $r^{\text{ième}}$ sous-segment de temps du $i^{\text{ième}}$ segment de temps et du dernier sous-segment de temps du $(i-1)^{\text{ième}}$ segment de temps ; et générer (103), lorsque r est supérieur à 0, la clé privée d'utilisateur du $r^{\text{ième}}$ sous-segment de temps du $i^{\text{ième}}$ segment de temps en utilisant le paramètre de mise à jour généré lorsque le dispositif de sécurité entre dans le $r^{\text{ième}}$ sous-segment de temps du $i^{\text{ième}}$ segment de temps, une clé privée d'utilisateur d'un $(r-1)^{\text{ième}}$ sous-segment de temps du $i^{\text{ième}}$ segment de temps, et des valeurs d'index de temps du $r^{\text{ième}}$ sous-segment de temps et du $(r-1)^{\text{ième}}$ sous-segment de temps du $i^{\text{ième}}$ segment de temps : une clé privée d'utilisateur d'un $0^{\text{ième}}$ sous-segment de temps d'un $0^{\text{ième}}$ segment de temps étant générée en utilisant un premier paramètre aléatoire et une valeur de hachage de clé, le premier paramètre aléatoire étant sélectionné aléatoirement à partir d'un ensemble de valeurs prédéfinies, et la valeur de hachage de clé étant des données d'élément qui appartiennent à un premier groupe cyclique de mappage bilinéaire et étant obtenue en exécutant une opération de hachage sur une valeur d'index de temps du $0^{\text{ième}}$ sous-segment de temps du $0^{\text{ième}}$ segment de temps, une clé privée d'utilisateur comportant un premier paramètre de clé privée et un deuxième paramètre de clé privée, et le paramètre de mise à jour comportant un premier paramètre de mise à jour et un deuxième paramètre de mise à jour ;
   ladite étape de génération (102), lorsque r est 0, comprenant les étapes suivantes :

   obtenir, lorsque r est 0, des données d'élément en exécutant une opération de hachage sur les valeurs d'index de temps du $r^{\text{ième}}$ sous-segment de temps du $i^{\text{ième}}$ segment de temps et du dernier sous-segment de temps du $(i-1)^{\text{ième}}$ segment de temps, les données d'élément appartenant au premier groupe cyclique ;
   générer un premier paramètre de clé privée du $r^{\text{ième}}$ sous-segment de temps du $i^{\text{ième}}$ segment de temps en utilisant les données d'élément, le premier paramètre de mise à jour et le deuxième paramètre de mise à jour qui sont générés lorsque le dispositif de sécurité entre dans le $r^{\text{ième}}$ sous-segment de temps du $i^{\text{ième}}$ segment de temps, et un premier paramètre de clé privée et un deuxième paramètre de clé privée du dernier sous-segment de temps du $(i-1)^{\text{ième}}$ segment de temps ; et générer un deuxième paramètre de clé privée du $r^{\text{ième}}$ sous-segment de temps du $i^{\text{ième}}$ segment de temps en utilisant le deuxième paramètre de mise à jour généré lorsque le dispositif de sécurité entre dans le $r^{\text{ième}}$ sous-segment de temps du $i^{\text{ième}}$ segment de temps et le deuxième paramètre de clé privée du dernier sous-segment de temps du $(i-1)^{\text{ième}}$ segment de temps ; et
   ladite étape de génération (103), lorsque r est supérieur à 0, comprenant les étapes suivantes :

   obtenir, lorsque r est supérieur à 0, les données d'élément en exécutant une opération de hachage sur les valeurs d'index de temps du $r^{\text{ième}}$ sous-segment de temps et du $(r-1)^{\text{ième}}$ sous-segment de temps du $i^{\text{ième}}$ segment de temps, les données d'élément appartenant au premier groupe cyclique ;
   générer le premier paramètre de clé privée du $r^{\text{ième}}$ sous-segment de temps du $i^{\text{ième}}$ segment de temps en utilisant les données d'élément, le premier paramètre de mise à jour et le deuxième paramètre de mise à jour qui sont générés lorsque le dispositif de sécurité entre dans le $r^{\text{ième}}$ sous-segment de temps du $i^{\text{ième}}$ segment de temps, et un premier paramètre de clé privée et un deuxième paramètre de clé privée du $(r-1)^{\text{ième}}$ sous-segment de temps du $i^{\text{ième}}$ segment de temps ; et
   générer le deuxième paramètre de clé privée du $r^{\text{ième}}$ sous-segment de temps du $i^{\text{ième}}$ segment de temps en utilisant le deuxième paramètre de clé privée du $(r-1)^{\text{ième}}$ sous-segment de temps du $i^{\text{ième}}$ segment de temps et le deuxième paramètre de mise à jour généré lorsque le dispositif de sécurité entre dans le $r^{\text{ième}}$ sous-segment de temps du $i^{\text{ième}}$ segment de temps.

2. Procédé selon la revendication 1, dans lequel le paramètre de mise à jour du $r^{\text{ième}}$ sous-segment de temps du $i^{\text{ième}}$ segment de temps est généré par le dispositif de sécurité en utilisant une clé privée de dispositif du $r^{\text{ième}}$ sous-segment de temps du $i^{\text{ième}}$ segment de temps, une clé privée de dispositif du $0^{\text{ième}}$ sous-segment de temps du $0^{\text{ième}}$ segment de temps étant un deuxième paramètre aléatoire sélectionné aléatoirement à partir de l'ensemble de valeurs prédéfinies ;
la clé privée de dispositif du r$^{ème}$ sous-segment de temps du i$^{ème}$ segment de temps est générée en utilisant une clé privée de dispositif du (r-1)$^{ème}$ sous-segment de temps du i$^{ème}$ segment de temps ou du dernier sous-segment de temps du (i-1)$^{ème}$ segment de temps, et un troisième paramètre aléatoire sélectionné aléatoirement à partir de l'ensemble de valeurs prédéfinies ; et
par conséquent, la clé privée d'utilisateur du 0$^{ème}$ sous-segment de temps du 0$^{ème}$ segment de temps est générée spécifiquement en utilisant le premier paramètre aléatoire, la clé privée de dispositif du 0$^{ème}$ sous-segment de temps du 0$^{ème}$ segment de temps, et la valeur de hachage de clé.

3. Procédé selon la revendication 1 ou 2, dans lequel : l'étape consistant à obtenir, lorsque r est 0, des données d'élément en exécutant une opération de hachage sur les valeurs d'index de temps du r$^{ème}$ sous-segment de temps du i$^{ème}$ segment de temps et du dernier sous-segment de temps du (i-1)$^{ème}$ segment de temps, les données d'élément appartenant au premier groupe cyclique ; générer un premier paramètre de clé privée du r$^{ème}$ sous-segment de temps du i$^{ème}$ segment de temps en utilisant les données d'élément, le premier paramètre de mise à jour et le deuxième paramètre de mise à jour qui sont générés lorsque le dispositif de sécurité entre dans le r$^{ème}$ sous-segment de temps du i$^{ème}$ segment de temps, et un premier paramètre de clé privée et un deuxième paramètre de clé privée du dernier sous-segment de temps du (i-1)$^{ème}$ segment de temps ; et
générer un deuxième paramètre de clé privée du r$^{ème}$ sous-segment de temps du i$^{ème}$ segment de temps en utilisant le deuxième paramètre de clé privée du dernier sous-segment de temps du (i-1)$^{ème}$ segment de temps et le deuxième paramètre de mise à jour généré lorsque le dispositif de sécurité entre dans le r$^{ème}$ sous-segment de temps du i$^{ème}$ segment de temps, comprennent :

générer, lorsque r est 0, la clé privée d'utilisateur du r$^{ème}$ sous-segment de temps du i$^{ème}$ segment de temps selon une formule de mise à jour de clé privée en utilisant le premier paramètre de mise à jour et le deuxième paramètre de mise à jour qui sont générés lorsque le dispositif de sécurité entre dans le r$^{ème}$ sous-segment de temps du i$^{ème}$ segment de temps, le premier paramètre de clé privée et le deuxième paramètre de clé privée du dernier sous-segment de temps du (i-1)$^{ème}$ segment de temps, et les valeurs d'index de temps du r$^{ème}$ sous-segment de temps du i$^{ème}$ segment de temps et du dernier sous-segment de temps du (i-1)$^{ème}$ segment de temps :
la formule de mise à jour de clé privée comprenant :

$$S_{i,r} = S_{i-1,RN[i-1]} + SKR_{i,r} - \sigma H_1(i,r) + u_{i-1,RN[i-1]}(H_1(i,r) - H_1(i-1,RN[i-1]))\ ;$$

et

$$u_{i,r} = u_{i-1,RN[i-1]} - \sigma\ ,$$

$S_{i,r}$ représentant le premier paramètre de clé privée du r$^{ème}$ sous-segment de temps du i$^{ème}$ segment de temps, et $u_{i,r}$ représentant le deuxième paramètre de clé privée du r$^{ème}$ sous-segment de temps du i$^{ème}$ segment de temps ;
$SKR_{i,r}$ représentant le premier paramètre de mise à jour du r$^{ème}$ sous-segment de temps du i$^{ème}$ segment de temps, et $\sigma$ représentant le deuxième paramètre de mise à jour du r$^{ème}$ sous-segment de temps du i$^{ème}$ segment de temps ;
$RN[i\text{-}1]$ représentant la valeur d'index de temps du dernier sous-segment de temps du (i-1)$^{ème}$ segment de temps ;
$H_1(i,r)$ représentant les données d'élément qui appartiennent au premier groupe cyclique et étant obtenu en exécutant une opération de hachage sur les valeurs d'index de temps i et r, et
$H_1(i\text{-}1,RN[i\text{-}1])$ représentant les données d'élément qui appartiennent au premier groupe cyclique et étant obtenu en exécutant une opération de hachage sur les valeurs d'index de temps i-1 et $RN[i\text{-}1]$ ;
l'étape consistant à obtenir, lorsque r est supérieur à 0, les données d'élément en exécutant une opération de hachage sur les valeurs d'index de temps du r$^{ème}$ sous-segment de temps et du (r-1)$^{ème}$ sous-segment de temps du i$^{ème}$ segment de temps, les données d'élément appartenant au premier groupe cyclique ;
générer le premier paramètre de clé privée du r$^{ème}$ sous-segment de temps du i$^{ème}$ segment de temps en utilisant les données d'élément, le premier paramètre de mise à jour et le deuxième paramètre de mise à jour qui sont générés lorsque le dispositif de sécurité entre dans le r$^{ème}$ sous-segment de temps du i$^{ème}$

segment de temps, et un premier paramètre de clé privée et un deuxième paramètre de clé privée du (r-1)$^{ième}$ sous-segment de temps du i$^{ème}$ segment de temps ; et

générer le deuxième paramètre de clé privée du r$^{ième}$ sous-segment de temps du i$^{ème}$ segment de temps en utilisant le deuxième paramètre de clé privée du (r-1)$^{ième}$ sous-segment de temps du i$^{ème}$ segment de temps et le deuxième paramètre de mise à jour, comprend :

générer, lorsque r est supérieur à 0, la clé privée d'utilisateur du r$^{ième}$ sous-segment de temps du i$^{ème}$ segment de temps selon une formule de rafraîchissement de clé privée en utilisant le premier paramètre de mise à jour et le deuxième paramètre de mise à jour qui sont générés lorsque le dispositif de sécurité entre dans le r$^{ième}$ sous-segment de temps du i$^{ème}$ segment de temps, le premier paramètre de clé privée et le deuxième paramètre de clé privée du (r-1)$^{ième}$ sous-segment de temps du i$^{ème}$ segment de temps, et les valeurs d'index de temps du r$^{ième}$ sous-segment de temps et du (r-1)$^{ième}$ sous-segment de temps du i$^{ème}$ segment de temps :

la formule de rafraîchissement de clé privée comprenant :

$$S_{i,r} = S_{i,r-1} + SKR_{i,r} - \sigma H_1(i,r) + u_{i,r-1}(H_1(i,r) - H_1(i,r-1)) \; ;$$

et

$$u_{i,r} = u_{i,r-1} - \sigma \, ,$$

$H_1(i,r\text{-}1)$ représentant les données d'élément qui appartiennent au premier groupe cyclique et étant obtenu en exécutant une opération de hachage sur les valeurs d'index de temps i et r-1 ; et la clé privée d'utilisateur du 0$^{ième}$ sous-segment de temps du 0$^{ième}$ segment de temps étant générée spécifiquement selon une formule de génération de clé en utilisant le premier paramètre aléatoire, la clé privée de dispositif du 0$^{ième}$ sous-segment de temps du 0$^{ième}$ segment de temps, et la valeur de hachage de clé :

la formule de génération de clé étant :

$$S_{0,0} = u_{0,0}H_1(0,0) + b_{0,0}H_1(0,0) \, ,$$

$S_{0,0}$ représentant un premier paramètre de clé privée du 0$^{ième}$ sous-segment de temps du 0$^{ième}$ segment de temps, $u_{0,0}$ étant le premier paramètre aléatoire, le premier paramètre aléatoire étant un deuxième paramètre de clé privée du 0$^{ième}$ sous-segment de temps du 0$^{ième}$ segment de temps, $H_1(0,0)$ étant une valeur de hachage du 0$^{ième}$ sous-segment de temps du 0$^{ième}$ segment de temps, et $b_{0,0}$ étant la clé privée de dispositif du 0$^{ième}$ sous-segment de temps du 0$^{ième}$ segment de temps.

4. Procédé selon la revendication 1, 2 ou 3, dans lequel le deuxième paramètre de mise à jour est le troisième paramètre aléatoire ;

lorsque r est 0, le premier paramètre de mise à jour étant généré spécifiquement par le dispositif de sécurité selon une formule de génération de premier paramètre en utilisant la clé privée de dispositif du r$^{ième}$ sous-segment de temps du i$^{ème}$ segment de temps, la clé privée de dispositif du dernier sous-segment de temps du (i-1)$^{ième}$ segment de temps, et les données d'élément qui appartiennent au premier groupe cyclique et qui sont obtenues en exécutant une opération de hachage sur les valeurs d'index de temps du r$^{ième}$ sous-segment de temps du i$^{ème}$ segment de temps et du dernier sous-segment de temps du (i-1)$^{ième}$ segment de temps :

la formule de génération de premier paramètre étant :

$$SKR_{i,r} = b_{i,r}H_1(i,r) - b_{i-1,RN[i-1]}H_1(i-1,RN[i-1]) \, ,$$

$b_{i,r}$ représentant la clé privée de dispositif du r$^{ième}$ sous-segment de temps du i$^{ème}$ segment de temps, $b_{i-1,}RN[i\text{-}1]$

représentant la clé privée de dispositif du dernier sous-segment de temps du (i-1)$^{ième}$ segment de temps, $b_{i,r}=$ $b_{i-1,RN[i-1]} + \delta$, et $\delta$ étant le troisième paramètre aléatoire ; et lorsque r est supérieur à 0, le premier paramètre de mise à jour étant généré spécifiquement par le dispositif de sécurité selon une formule de génération de deuxième paramètre en utilisant la clé privée de dispositif du r$^{ième}$ sous-segment de temps du i$^{ième}$ segment de temps, la clé privée de dispositif du (r-1)$^{ième}$ sous-segment de temps du i$^{ième}$ segment de temps, et les données d'élément qui appartiennent au premier groupe cyclique et qui sont obtenues en exécutant une opération de hachage sur les valeurs d'index de temps du r$^{ième}$ sous-segment de temps et du (r-1)$^{ième}$ sous-segment de temps du i$^{ième}$ segment de temps :

la formule de génération de deuxième paramètre étant :

$$SKR_{i,r} = b_{i,r}H_1(i,r) - b_{i,r-1}H_1(i,r-1),$$

$b_{i,r-1}$ représentant la clé privée de dispositif du (r-1)$^{ième}$ sous-segment de temps du i$^{ième}$ segment de temps, et $b_{i,r}=b_{i,r-1} + \delta$.

5.  Procédé selon l'une quelconque des revendications 1 à 4 dans lequel, avant l'étape consistant à obtenir un message de mise à jour de clé privée fourni par un dispositif de sécurité, le procédé comprend en outre : obtenir un premier groupe cyclique de q$^{ième}$ ordre G1 et un deuxième groupe cyclique de q$^{ième}$ ordre G2 qui sont générés selon un paramètre de sécurité k, les deux groupes cycliques de q$^{ième}$ ordre satisfaisant un mappage bilinéaire e: G1xG1→G2, q étant un nombre premier, et k étant une longueur binaire de q :

l'ensemble de valeurs prédéfinies étant Z*$_q$, Z*$_q$ représentant un ensemble restant qui ne comprend pas une valeur 0 et qui est obtenu en exécutant une opération modulo entre un ensemble de nombres entiers Z et q.

6.  Procédé selon l'une quelconque des revendications 1 à 5, dans lequel le procédé comprend en outre :

décrypter, lorsqu'un texte chiffré obtenu en cryptant des données cible en utilisant une clé publique d'utilisateur et qu'une valeur d'index de temps cible est reçu, le texte chiffré en utilisant une clé privée d'utilisateur correspondant à la valeur d'index de temps cible, afin d'obtenir les données cible.

7.  Procédé selon la revendication 6, dans lequel la clé publique d'utilisateur est générée selon une formule de génération de clé publique en utilisant un générateur du premier groupe cyclique, et la clé privée de dispositif et le premier paramètre de clé privée du 0$^{ième}$ sous-segment de temps du 0$^{ième}$ segment de temps, la formule de génération de clé publique étant :

$$PK_B = b_{0,0}P , \quad P_{pub} = u_{0,0}P ,$$

$PK_B$ étant un premier paramètre de clé publique, $P_{pub}$ étant un deuxième paramètre de clé publique, et P étant le générateur du premier groupe cyclique ;
par conséquent, le texte chiffré étant obtenu spécifiquement selon une formule de cryptage, la formule de cryptage étant :

$$V = M \oplus H_2(e(P_{pub} + PK_B, H_1(i,r))^x) ;$$

et

$$U = xP,$$

x étant un quatrième paramètre aléatoire sélectionné aléatoirement à partir de l'ensemble de valeurs prédéfinies, M étant les données cible, le texte chiffré comportant U, V, i, et r ; et $H_2(e(P_{pub}+Pk_B,H_1(i,r))^x)$ représentant des données d'élément qui appartiennent au deuxième groupe cyclique et qui sont obtenues en exécutant une opération de hachage sur $e(P_{pub}+Pk_B,H_1(i,r))^x$ ;

par conséquent, l'étape consistant à décrypter le texte chiffré en utilisant une clé privée d'utilisateur correspondant à la valeur d'index de temps, afin d'obtenir les données cible, étant spécifiquement : obtenir les données cible selon une formule de décryptage en utilisant la clé privée d'utilisateur correspondant à la valeur d'index de temps, la formule de décryptage étant :

$$M = V \oplus H_2\big(e(U,S_{i,r})\big),$$

$H_2(e(U,S_{i,r}))$ représentant les données d'élément qui appartiennent au deuxième groupe cyclique et qui sont obtenues en exécutant une opération de hachage sur $e(U,S_{i,r})$.

8. Procédé de traitement de clé, comprenant les étapes suivantes :

générer un paramètre de mise à jour lorsqu'un dispositif de sécurité entre dans un $r^{ième}$ sous-segment de temps d'un $i^{ième}$ segment de temps, et envoyer un message de mise à jour qui contient le paramètre de mise à jour à un équipement utilisateur, le message de mise à jour étant utilisé pour ordonner à l'équipement utilisateur de : lorsque r est 0, générer une clé privée d'utilisateur du $r^{ième}$ sous-segment de temps du $i^{ième}$ segment de temps en utilisant le paramètre de mise à jour, une clé privée d'utilisateur d'un dernier sous-segment de temps d'un $(i-1)^{ième}$ segment de temps, et des valeurs d'index de temps du $r^{ième}$ sous-segment de temps du $i^{ième}$ segment de temps et du dernier sous-segment de temps du $(i-1)^{ième}$ segment de temps ; et, lorsque r est supérieur à 0, générer la clé privée d'utilisateur du $r^{ième}$ sous-segment de temps du $i^{ième}$ segment de temps en utilisant le paramètre de mise à jour, une clé privée d'utilisateur d'un $(r-1)^{ième}$ sous-segment de temps du $i^{ième}$ segment de temps, et des valeurs d'index de temps du $r^{ième}$ sous-segment de temps et du $(r-1)^{ième}$ sous-segment de temps du $i^{ième}$ segment de temps :

une clé privée d'utilisateur d'un $0^{ième}$ sous-segment de temps d'un $0^{ième}$ segment de temps étant générée en utilisant un premier paramètre aléatoire et une valeur de hachage de clé, le premier paramètre aléatoire étant sélectionné aléatoirement à partir d'un ensemble de valeurs prédéfinies, et la valeur de hachage de clé étant des données d'élément qui appartiennent à un premier groupe cyclique et étant obtenue en exécutant une opération de hachage sur une valeur d'index de temps du $0^{ième}$ sous-segment de temps du $0^{ième}$ segment de temps,

le paramètre de mise à jour comportant un premier paramètre de mise à jour et un deuxième paramètre de mise à jour, et une clé privée d'utilisateur comportant un premier paramètre de clé privée et un deuxième paramètre de clé privée, et

par conséquent, l'étape consistant à générer un paramètre de mise à jour lorsqu'un dispositif de sécurité entre dans un $r^{ième}$ sous-segment de temps d'un $i^{ième}$ segment de temps comprenant :

générer, lorsque r est 0, le paramètre de mise à jour selon une formule de génération de premier paramètre en utilisant une clé privée de dispositif du $r^{ième}$ sous-segment de temps du $i^{ième}$ segment de temps, une clé privée de dispositif du dernier sous-segment de temps du $(i-1)^{ième}$ segment de temps, et les valeurs d'index de temps du $r^{ième}$ sous-segment de temps du $i^{ième}$ segment de temps et du dernier sous-segment de temps du $(i-1)^{ième}$ segment de temps :

la formule de génération de premier paramètre étant :

$$SKR_{i,r} = b_{i,r}H_1(i,r) - b_{i-1,RN[i-1]}H_1(i-1,RN[i-1]),$$

$b_{i,r}$ représentant la clé privée de dispositif du $r^{ième}$ sous-segment de temps du $i^{ième}$ segment de temps, $b_{i-1,RN[i-1]}$ représentant la clé privée de dispositif du dernier sous-segment de temps du $(i-1)^{ième}$ segment de temps, $b_{i,r} = b_{i-1,RN[i-1]} + \delta$, et $\delta$ étant un troisième paramètre aléatoire sélectionné aléatoirement à partir de l'ensemble de valeurs prédéfinies ; et

générer, lorsque r est supérieur à 0, le paramètre de mise à jour selon une formule de génération de deuxième paramètre en utilisant la clé privée de dispositif du $r^{ième}$ sous-segment de temps du

ième segment de temps, la clé privée de dispositif du (r-1)ième sous-segment de temps du ième segment de temps, et les valeurs d'index de temps du rième sous-segment de temps et du (r-1)ième sous-segment de temps du ième segment de temps :
la formule de génération de deuxième paramètre étant :

$$SKR_{i,r} = b_{i,r}H_1(i,r) - b_{i,r-1}H_1(i,r-1),$$

$b_{i,r-1}$ représentant la clé privée de dispositif du (r-1)ième sous-segment de temps du ième segment de temps, et $b_{i,r}=b_{i,r-1} + \delta$.

9. Appareil de traitement de clé, comprenant :

une unité d'obtention (401), configurée pour obtenir un message de mise à jour de clé privée fourni par un dispositif de sécurité, le message de mise à jour de clé privée comportant un paramètre de mise à jour généré lorsque le dispositif de sécurité entre dans un rième sous-segment de temps d'un ième segment de temps, i et r représentant des valeurs d'index de temps et étant tous deux des nombres entiers supérieurs ou égaux à 0 ;
une première unité de mise à jour (402), configurée pour : générer, lorsque r est 0, une clé privée d'utilisateur du rième sous-segment de temps du ième segment de temps en utilisant le paramètre de mise à jour généré lorsque le dispositif de sécurité entre dans le rième sous-segment de temps du ième segment de temps, une clé privée d'utilisateur d'un dernier sous-segment de temps d'un (i-1)ième segment de temps, et des valeurs d'index de temps du rième sous-segment de temps du ième segment de temps et du dernier sous-segment de temps du (i-1)ième segment de temps ; et une deuxième unité de mise à jour (403), configurée pour : générer, lorsque r est supérieur à 0, la clé privée d'utilisateur du rième sous-segment de temps du ième segment de temps en utilisant le paramètre de mise à jour généré lorsque le dispositif de sécurité entre dans le rième sous-segment de temps du ième segment de temps, une clé privée d'utilisateur d'un (r-1)ième sous-segment de temps du ième segment de temps, et des valeurs d'index de temps du rième sous-segment de temps et du (r-1)ième sous-segment de temps du ième segment de temps, et
l'appareil étant configuré pour :

générer une clé privée d'utilisateur d'un 0ième sous-segment de temps d'un 0ième segment de temps en utilisant un premier paramètre aléatoire et une valeur de hachage de clé, le premier paramètre aléatoire étant sélectionné aléatoirement à partir d'un ensemble de valeurs prédéfinies, et la valeur de hachage de clé étant des données d'élément qui appartiennent à un premier groupe cyclique de mappage bilinéaire et étant obtenue en exécutant une opération de hachage sur une valeur d'index de temps du 0ième sous-segment de temps du 0ième segment de temps, une clé privée d'utilisateur comportant un premier paramètre de clé privée et un deuxième paramètre de clé privée, et le paramètre de mise à jour comportant un premier paramètre de mise à jour et un deuxième paramètre de mise à jour ;
la première unité de mise à jour (402) étant configurée spécifiquement pour : obtenir, lorsque r est 0, des données d'élément en exécutant une opération de hachage sur les valeurs d'index de temps du rième sous-segment de temps du ième segment de temps et du dernier sous-segment de temps du (i-1)ième segment de temps, les données d'élément appartenant au premier groupe cyclique ; générer un premier paramètre de clé privée du rième sous-segment de temps du ième segment de temps en utilisant les données d'élément, le premier paramètre de mise à jour et le deuxième paramètre de mise à jour qui sont générés lorsque le dispositif de sécurité entre dans le rième sous-segment de temps du ième segment de temps, et un premier paramètre de clé privée et un deuxième paramètre de clé privée du dernier sous-segment de temps du (i-1)ième segment de temps ; et générer un deuxième paramètre de clé privée du rième sous-segment de temps du ième segment de temps en utilisant le deuxième paramètre de mise à jour généré lorsque le dispositif de sécurité entre dans le rième sous-segment de temps du ième segment de temps et le deuxième paramètre de clé privée du dernier sous-segment de temps du (i-1)ième segment de temps ; et
la deuxième unité de mise à jour (403) étant configurée spécifiquement pour : obtenir, lorsque r est supérieur à 0, les données d'élément en exécutant une opération de hachage sur les valeurs d'index de temps du rième sous-segment de temps et du (r-1)ième sous-segment de temps du ième segment de temps, les données d'élément appartenant au premier groupe cyclique ; générer le premier paramètre de clé privée du rième sous-segment de temps du ième segment de temps en utilisant les données d'élément, le premier paramètre de mise à jour et le deuxième paramètre de mise à jour qui sont générés lorsque le dispositif de sécurité entre dans le rième sous-segment de temps du ième segment de temps, et un premier paramètre de clé privée et un deuxième paramètre de clé privée du $(r-1)^{ième}$ sous-segment de temps du $i^{ième}$ segment de temps ; et générer le deuxième paramètre de clé privée du $r^{ième}$ sous-segment de temps du $i^{ième}$ segment de temps en utilisant le deuxième paramètre de clé privée du $(r-1)^{ième}$ sous-segment de temps du $i^{ième}$ segment de temps et le deuxième paramètre de mise à jour généré lorsque le dispositif de sécurité entre dans le $r^{ième}$ sous-segment de temps du $i^{ième}$ segment de temps.

10. Appareil selon la revendication 9, dans lequel le paramètre de mise à jour du $r^{ième}$ sous-segment de temps du $i^{ième}$ segment de temps est généré par le dispositif de sécurité en utilisant une clé privée de dispositif du $r^{ième}$ sous-segment de temps du $i^{ième}$ segment de temps, une clé privée de dispositif du $0^{ième}$ sous-segment de temps du $0^{ième}$ segment de temps étant un deuxième paramètre aléatoire sélectionné aléatoirement à partir de l'ensemble de valeurs prédéfinies ; et la clé privée de dispositif du $r^{ième}$ sous-segment de temps du $i^{ième}$ segment de temps étant générée en utilisant une clé privée de dispositif du $(r-1)^{ième}$ sous-segment de temps du $i^{ième}$ segment de temps ou du dernier sous-segment de temps du $(i-1)^{ième}$ segment de temps, et un troisième paramètre aléatoire sélectionné aléatoirement à partir de l'ensemble de valeurs prédéfinies ; et

par conséquent, la clé privée d'utilisateur du $0^{ième}$ sous-segment de temps du $0^{ième}$ segment de temps étant générée spécifiquement en utilisant le premier paramètre aléatoire, la clé privée de dispositif du $0^{ième}$ sous-segment de temps du $0^{ième}$ segment de temps, et la valeur de hachage de clé.

11. Appareil selon la revendication 9 ou 10, comprenant en outre :

une unité de génération de groupe cyclique (404), configurée pour générer un premier groupe cyclique de $q^{ième}$ ordre G1 et un deuxième groupe cyclique de $q^{ième}$ ordre G2 selon un paramètre de sécurité k, de sorte que les deux groupes cycliques de $q^{ième}$ ordre satisfont un mappage bilinéaire e: G1xG1→G2, q étant un nombre premier, et k étant une longueur binaire de q,
l'ensemble de valeurs prédéfinies étant $Z^*_q$, $Z^*_q$ représentant un ensemble restant qui ne comprend pas une valeur 0 et qui est obtenu en exécutant une opération modulo entre un ensemble de nombres entiers Z et q.

12. Appareil selon la revendication 11, comprenant en outre :

une unité de décryptage (405), configurée pour : décrypter, lorsqu'un texte chiffré obtenu en cryptant des données cible en utilisant une clé publique et qu'une valeur d'index de temps cible est reçue, le texte chiffré en utilisant une clé privée d'utilisateur correspondant à la valeur d'index de temps cible, afin d'obtenir les données cible.

13. Appareil de traitement de clé, comprenant :

une unité de génération de paramètre de mise à jour (601), configurée pour : générer un paramètre de mise à jour lors d'une entrée dans un $r^{ième}$ sous-segment de temps d'un $i^{ième}$ segment de temps, et envoyer le paramètre de mise à jour à un équipement utilisateur, le paramètre de mise à jour étant utilisé pour ordonner à l'équipement utilisateur de : lorsque r est 0, générer une clé privée d'utilisateur du $r^{ième}$ sous-segment de temps du $i^{ième}$ segment de temps en utilisant le paramètre de mise à jour, une clé privée d'utilisateur d'un dernier sous-segment de temps d'un $(i-1)^{ième}$ segment de temps, et des valeurs d'index de temps du $r^{ième}$ sous-segment de temps du $i^{ième}$ segment de temps et du dernier sous-segment de temps du $(i-1)^{ième}$ segment de temps ; et, lorsque r est supérieur à 0, générer la clé privée d'utilisateur du $r^{ième}$ sous-segment de temps du $i^{ième}$ segment de temps en utilisant le paramètre de mise à jour, une clé privée d'utilisateur d'un $(r-1)^{ième}$ sous-segment de temps du $i^{ième}$ segment de temps, et des valeurs d'index de temps du $r^{ième}$ sous-segment de temps et du $(r-1)^{ième}$ sous-segment de temps du $i^{ième}$ segment de temps, et
l'appareil étant configuré pour :

générer une clé privée d'utilisateur d'un $0^{ième}$ sous-segment de temps d'un $0^{ième}$ segment de temps en utilisant un premier paramètre aléatoire et une valeur de hachage de clé, le premier paramètre aléatoire étant sélectionné aléatoirement à partir d'un ensemble de valeurs prédéfinies, et la valeur de hachage de clé étant des données d'élément qui appartiennent à un premier groupe cyclique et étant obtenue en exécutant une opération de hachage sur une valeur d'index de temps du $0^{ième}$ sous-segment de temps du $0^{ième}$ segment de temps,
le paramètre de mise à jour comportant un premier paramètre de mise à jour et un deuxième paramètre de mise à jour, et une clé privée d'utilisateur comportant un premier paramètre de clé privée et un deuxième paramètre de clé privée, et

l'unité de génération de paramètre de mise à jour (601) comprenant :

une première unité de génération (6011), configurée pour : générer, lorsque r est 0, le paramètre de mise à jour selon une formule de génération de premier paramètre en utilisant une clé privée de dispositif du r$^{ème}$ sous-segment de temps du i$^{ème}$ segment de temps, une clé privée de dispositif du dernier sous-segment de temps du (i-1)$^{ème}$ segment de temps, et les valeurs d'index de temps du r$^{ème}$ sous-segment de temps du i$^{ème}$ segment de temps et du dernier sous-segment de temps du (i-1)$^{ème}$ segment de temps :

la formule de génération de premier paramètre étant :

$$SKR_{i,r} = b_{i,r}H_1(i,r) - b_{i-1,RN[i-1]}H_1(i-1,RN[i-1]),$$

$b_{i,r}$ représentant la clé privée de dispositif du r$^{ème}$ sous-segment de temps du i$^{ème}$ segment de temps, $b_{i-1,RN[i-1]}$ représentant la clé privée de dispositif du dernier sous-segment de temps du (i-1)$^{ème}$ segment de temps, $b_{i,r} = b_{i-1,RN[i-1]} + \delta$, et $\delta$ étant un troisième paramètre aléatoire sélectionné aléatoirement à partir de l'ensemble de valeurs prédéfinies ; et

une deuxième unité de génération (6012), configurée pour : générer, lorsque la valeur d'index de temps r est supérieure à 0, le paramètre de mise à jour selon une formule de génération de deuxième paramètre en utilisant la clé privée de dispositif du r$^{ème}$ sous-segment de temps du i$^{ème}$ segment de temps, la clé privée de dispositif du (r-1)$^{ème}$ sous-segment de temps du i$^{ème}$ segment de temps, et les valeurs d'index de temps du r$^{ème}$ sous-segment de temps et du (r-1)$^{ème}$ sous-segment de temps du i$^{ème}$ segment de temps :

la formule de génération de deuxième paramètre étant :

$$SKR_{i,r} = b_{i,r}H_1(i,r) - b_{i,r-1}H_1(i,r-1),$$

$b_{i,r-1}$ représentant la clé privée de dispositif du (r-1)$^{ème}$ sous-segment de temps du i$^{ème}$ segment de temps, et $b_{i,r} = b_{i,r-1} + \delta$.

Obtain a private key update message provided by a security device — 101

When r is 0, generate a user's private key of an $r^{th}$ time sub-segment of an $i^{th}$ time segment by using an update parameter, a user's private key, and a time index value — 102

When r is greater than 0, generate the user's private key of the $r^{th}$ time sub-segment of the $i^{th}$ time segment by using the update parameter, the user's private key, and the time index value — 103

FIG. 1

Obtain a $q^{th}$-order first cyclic group G1 and a $q^{th}$-order second cyclic group G2 that are generated according to a security parameter k — 201

Obtain a private key update message provided by a security device — 202

Generate a user's private key of an $r^{th}$ time sub-segment of an $i^{th}$ time segment according to a first private key update formula — 203

Generate the user's private key of the $r^{th}$ time sub-segment of the $i^{th}$ time segment according to a second private key update formula — 204

Receive a ciphertext generated by encrypting target data by using a user's public key and a target time index value — 205

Decrypt the ciphertext by using a user's private key corresponding to the target time index value, so as to obtain the target data — 206

FIG. 2

Generate a $q^{th}$-order first cyclic group G1 and a $q^{th}$-order second cyclic group G2 in advance according to a security parameter k — 301

Randomly select a first random parameter and a second random parameter from a preset value set, and generate a user's private key, a user's public key, and a security device's private key that are of a $0^{th}$ time sub-segment of a $0^{th}$ time segment — 302

The security device generates an update parameter of an $r^{th}$ time sub-segment of an $i^{th}$ time segment — 303

A user equipment obtains a first update parameter and a second update parameter of the $r^{th}$ time sub-segment of the $i^{th}$ time segment — 304

— 305
Generate a user's private key of the $r^{th}$ time sub-segment of the $i^{th}$ time segment according to a first private key update formula

— 306
Generate the user's private key of the $r^{th}$ time sub-segment of the $i^{th}$ time segment according to a second private key update formula

Receive a ciphertext generated by encrypting target data by using a user's public key and a target time index value — 307

Decrypt the ciphertext by using a user's private key corresponding to the target time index value, so as to obtain the target data — 308

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009323937 A1

- US 20110176681 A1

**Non-patent literature cited in the description**

- Efficient authentication and signing of multicast streams over lossy channels. **PERRIG A. et al.** Proceedings of 2000 IEEE Symposium on Security and Privacy. IEEE Computer Society, 14 May 2000, 56-73